(19) Europäisches Patentamt
European Patent Office
Office européen des brevets

(11) **EP 2 490 358 B1**

(12) **EUROPEAN PATENT SPECIFICATION**

(45) Date of publication and mention
of the grant of the patent:
**06.05.2020   Bulletin 2020/19**

(51) Int Cl.:
*G05B 19/418* (2006.01)          *H04J 3/06* (2006.01)

(21) Application number: **12155571.8**

(22) Date of filing: **15.02.2012**

(54) **Communication controller**

Kommunikationssteuerung

Contrôleur de communication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.02.2011   JP 2011031629**

(43) Date of publication of application:
**22.08.2012   Bulletin 2012/34**

(73) Proprietor: **Hitachi Industrial Equipment Systems
Co., Ltd.
Tokyo 101-0022 (JP)**

(72) Inventors:
• **Maruyama, Tatsuya**
  **Tokyo, 100-8220 (JP)**
• **Yamada, Tsutomu**
  **Tokyo, 100-8220 (JP)**
• **Ohashi, Hironori**
  **Chiba, 275-8611 (JP)**
• **Matsumoto, Yutaka**
  **Chiba, 275-8611 (JP)**
• **Aoyama, Tomoyuki**
  **Chiba, 275-8611 (JP)**

(74) Representative: **MERH-IP Matias Erny Reichl
Hoffmann
Patentanwälte PartG mbB
Paul-Heyse-Strasse 29
80336 München (DE)**

(56) References cited:
**US-A1- 2002 064 157**

• **Albert Dunberg: "Evaluation of Reliable Network
Communication Solutions in an Industrial
Environment", , 1 January 2007 (2007-01-01),
pages 1-49, XP055426875, Sweden, Stockholm
Retrieved from the Internet:
URL:https://www.nada.kth.se/utbildning/gru
kth/exjobb/rapportlistor/2007/rapporter07/
dunberg_albert_07019.pdf [retrieved on
2017-11-20]**
• **T. Socolofsky ET AL: "RFC 1180 - TCP/IP tutorial",
Network working Group, 1 January 1991
(1991-01-01), pages 1-28, XP055426469,
Retrieved from the Internet:
URL:https://tools.ietf.org/html/rfc1180 [retrieved
on 2017-11-17]**

**Description**

FIELD OF THE INVENTION

The present invention relates to a communication controller that communicates with one or more control devices via a network, and particularly to a technique in which a nonperiodic signal that is irregularly generated is transmitted while periodically transmitting a periodic signal, or the periodic signal is retransmitted if the transmission fails.

BACKGROUND OF THE INVENTION

As a configuration of a control system, one or more communication controllers control one or more control devices via a network. The communication controller transmits a control command and the like to the control devices via the network. As an example of the network used in such a control system, Ethernet (Registered Trademark), RS-232C, RS-422, RS-485, CAN (Registered Trademark), DeviceNet, Industrial Ethernet, or the like can be given.

In a control system in which multiple control devices are connected to each other via a network, it is required for the control devices to be operated in synchronization with each other depending on application targets. The operation in synchronization with each other means that the respective control devices are operated in accordance with control regulations shared in the control system, and that the timing of inputting to a sensor of each control device used for computations of the control regulations and the timing of outputting from an actuator derived from the control regulations are always the same among the respective control devices. Accordingly, it is necessary to ensure the synchronization accuracy in the control system in which multiple control devices are connected to each other via the network.

As an instance for showing the necessity of the synchronization accuracy, exemplified are industrial robot arms configured using multiple joints . In the case of the joints configured using servomotors, if the operations of the servomotors are not synchronized with each other, it is impossible to obtain the desired trajectories of the robot arms . Alternatively, in the case of working machines configured using multiple servomotors, the processing accuracy varies depending on the synchronization accuracy of each servomotor. The higher the control performance required for the control systembecomes, the more the synchronization accuracy between the respective control devices is required.

The technical development of a real-time communication protocol and a time synchronization protocol has contributed to the synchronized operations of the control devices configuring the control system.

Of those, the time synchronization protocol enables time synchronization by transmitting and receiving information such as time information and a communication delay among the communication controller and the control devices. Further, in order to realize the time synchronization protocol, it is desirable that the communication delay is constant, and less fluctuation of the communication delay is required.

Therefore, in order to realize the time synchronization protocol, the real-time communication protocol is generally applied. A combination of the real-time communication protocol and the time synchronization protocol enables time synchronization among the respective control devices.

The necessity of the time synchronization on the control device side configuring the control system and the measures for that have been described above. On the other hand, it is necessary to consider the communication controller side that communicates with the control devices. This means to ensure the accuracy of the transmission timing of the communication controller.

In the case where the respective control devices are operated on the basis of the synchronized time by applying the time synchronization protocol, not only the synchronization of the respective control devices, but also the synchronization of the transmission timing of the control command in the communication controller is required with a high degree of accuracy. For example, in the case where communication delays between the communication controller and the respective control devices are different from each other, some control devices cannot receive the control command from the communication controller in the same control period.

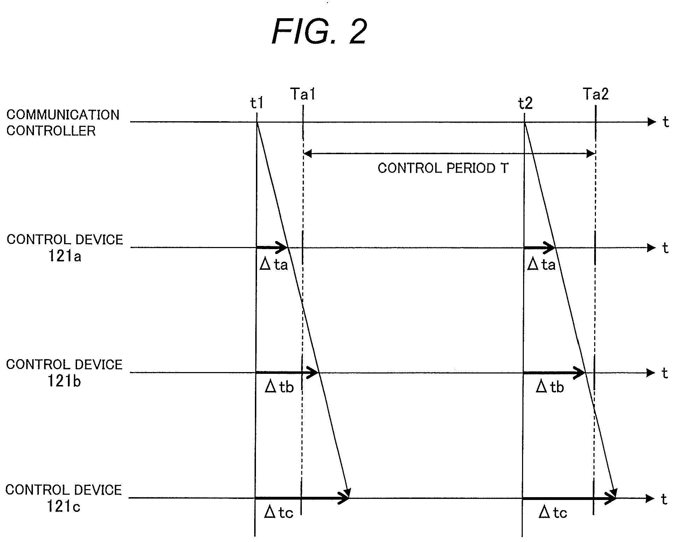

This is explained using a concrete example of Fig. 2. The horizontal axis of Fig. 2 represents Time t, and the communication controller and the control devices 121 each receiving a signal from the communication controller are illustrated in the vertical direction. The above-described time synchronization protocol is applied between the communication controller and each control device 121, and the communication controller and the control devices 121 are operated on the basis of synchronized Time Tal and Time Ta2 to execute a predetermined process in a constant control period T.

In the drawing, it is assumed that the communication controller transmits a signal to each control device 121 in each control period T and the transmission timings are t1 and t2. Further, it is assumed that periods of time of communication delay between the communication controller and the control devices 121a, 121b, and 121c are Δta, Δtb, and Δtc, respectively.

As a result, the control devices 121b and 121c receive the signal transmitted at the transmission timing t1 in the control period starting from Time Tal and the control device 121a receives the signal in the previous control period in the illustrated example. The respective control devices receive the signal transmitted at the transmission timing t2 in the control periods in a manner different from the above. In this case, the control device 121c receives the signal in the control period starting from Time Ta2, and the control devices 121a and 121b receive the signal in the previous control period starting from Time Tal.

Therefore, the control device 121a and the control devices 121b and 121c are operated under different control commands by the signal transmitted at the transmission timing t1. Further, the control devices 121a, 121b and the control device 121c are operated under different control commands by the signal transmitted at the transmission timing t2. Furthermore, this relation varies depending on the transmission timing of the communication controller. This leads to deterioration of the performance of the control system as a result.

Further, in the case of a time-division network scheme in which time used for the network is allocated to each control device in a time-divisionmanner, the control period is generally regulated on the basis of a synchronization command from the communication controller. In this case, the synchronization accuracy of the transmission timing in the communication controller directly affects the accuracy of the control period. If the synchronization accuracy of the transmission timing in the communication controller is poor and the transmission period largely fluctuates, the control period of the control system becomes short or long to cause deterioration in the control performance of the control system.

In the control system in which the communication controller and the control devices are connected to each other via the network to execute predetermined control, it is necessary to ensure the above-described synchronization accuracy and the accuracy of the transmission timing of the communication controller. Even if these are ensured, it is necessary to further consider the following influence factors.

First, the influence of the noncontrol command needs to be considered. Various signals and information are transmitted and received between the communication controller and the control devices. A control command is typical of those, and the operation timing of an actuator at field level can be synchronized by ensuring the synchronization accuracy and the accuracy of the transmission timing with respect to the control command.

The noncontrol command is a signal or information other than the control command, and is a request of obtaining management information and working information transmitted from the communication controller to the control devices. High synchronization accuracy is not required for the noncontrol command. However, the noncontrol command is a necessary command in executing the control system. The noncontrol command is transmitted from the communication controller at an appropriate timing in a control period. In the case where the transmission timing of the noncontrol command in the communication controller is immediately before the transmission timing of the control command, there is a possibility that the transmission timing of the control command is delayed.

Second, the influence of retransmission needs to be considered. The retransmission is performed in consideration of a packet loss on a network, and is performed if data have been incompletely received for some reason. The retransmission is useful in improving data transmissibility from the communication controller to the control devices. It is impossible in practice to securely transmit all packets due to a predetermined bit error rate especially in physical media of a network. Therefore, a retransmission function is essential in a system or the like for which high reliability is required.

The execution of the retransmission process possibly causes a delay of not only the noncontrol command, but also the transmission timing of the control command itself. In the case where the transmission timing of the retransmission is immediately before the transmission timing of the control command, there is a possibility that the transmission timing of the control command is delayed.

The time-division network scheme copes with the influence of the noncontrol command and the retransmission by providing a dedicated time slot for network use. In this case, if the noncontrol command and the retransmission are communicated in the time slot, the influence on the synchronization accuracy of the transmission timing of the control command can be eliminated.

However, even if neither the noncontrol command nor the retransmission exists, the dedicated time slot needs to be allocated in this method, and the bandwidth of the network is wasted. Especially, the influence of the time slot makes the communication period longer, and as a result, the control period possibly becomes long. In general, the longer the control period becomes, the lower the control performance becomes. Thus, the long control period is not desirable.

Further, the data size of the noncontrol command is not uniquely determined by its nature, and thus the time slot for the noncontrol command cannot be uniquely set. Thus, the time slot tends to be long with the assumption of the worst value, and there is a possibility that the control period accordingly becomes much longer. In addition, even in the case where the noncontrol command is divided after the maximum size of the noncontrol command is determined, additional processes such as a division process and a connection process are needed. Thus, computing resources such as hardware and software are disadvantageously wasted.

As described above, in the communication controller and the control devices that are connected to each other via the network, the transmission timing of the control command is delayed depending on the transmission timing of the noncontrol command such as a request of obtaining management information and working information transmitted to the control devices, or depending on the transmission timing of the retransmission of the control command.

The control commands are periodically transmitted whereas transmission requests for the noncontrol commands or retransmission commands are irregularly generated and are transmitted by using an extra time of the transmission period. Therefore, the control commands are handled as periodic signals in transmission whereas the noncontrol commands or the retransmission commands shouldbe called as nonperiodic signals because the transmission requests for those are irregularly generated. Further, since the control commands are handled as the periodic signals, the noncontrol commands are called as the nonperiodic signals.

In Japanese Patent Application Laid-Open No. 2007-158495 (Patent Document 1), as handling of the retransmission commands among the nonperiodic signals, retransmission is performed on the basis of the number of retransmissions in accordance with the real-time level and the reliability level of transmission data. In addition, in Japanese Patent Application Laid-Open No. HII-331261 (Patent Document 2), if a period of time required for a retransmission process exceeds a time limit, a packet as a retransmission target is discarded and the retransmission is stopped.

The present invention relates to a communication controller that communicates with one of more control devices via a network on the premise that the synchronization accuracy and the accuracy of the transmission timing of the communication controller are ensured. According to Patent Document 1 and Patent Document 2, however, the retransmission is performed or stopped. However, the communications described in Patent Document 1 and Patent Document 2 are intended neither to improve the synchronization accuracy nor to shorten the period. According to Patent Document 2, even the periodic transmission is not performed.

US 2002 064157 A1 relates to a method for transmitting data via switched data networks in the field of industrial systems, in which real-time-critical and non-real-time-critical data are transmitted, the switched data network being set up between at least two users, especially a transmitter and a receiver, the data being transmitted in at least one transmission cycle with adjustable period, each transmission cycle being subdivided into at least one first section for the transmission of real-time-critical data for real-time control and at least one second section for the transmission of non-real-time-critical data.

An object of the present invention is to provide a communication controller that enables communications in which nonperiodic signals can be transmitted without having an impact on transmission of a control command in a constant period.

SUMMARY OF THE INVENTION

According to the present invention, a communication controller with the control performance improved can be provided.

BRIEF DESCRIPTION OF THE DRAWINGS

Fig. 1 is a diagram for showing execution procedures of a schedule unit according to the present invention.
Fig. 2 is a diagram for showing transmission and reception timings of a signal between a communication controller and control devices.
Fig. 3 is a diagram for showing an example of a control system to which the present invention can be applied.
Fig. 4 is a diagram for showing another example of a control system to which the present invention can be applied.
Fig. 5 is a diagram for showing a hardware configuration of the communication controller.
Fig. 6 is a diagram for showing a functional configuration of a communication LSI.
Fig. 7 is a diagram for showing operational procedures when data are left unsent for a long period of time.
Fig. 8 is a diagram for showing an estimation method of a processing period of time of a data processing time estimation unit.
Fig. 9 is a diagram for showing scheduling of transmission data by means of a time axis.
Fig. 10 is a diagram for showing scheduling of transmission data by means of a time axis.
Fig. 11 is a diagram for showing a functional configuration of the communication LSI.
Fig. 12 is a diagram for showing execution procedures of the schedule unit when retransmission is performed.
Fig. 13 is a diagram for showing execution procedures of the schedule unit when retransmission is given priority.
Fig. 14 is a diagram for showing scheduling of transmission data by means of a time axis.
Fig. 15 is a diagram for showing scheduling of transmission data by means of a time axis.
Fig. 16 is a diagram for showing an example of a hardware configuration of the communication controller.
Fig. 17 is a diagram for showing a software configuration running on a CPU.

DETAILED DESCRIPTION OF THE PREFERRED EMBODIMENT

Hereinafter, embodiments of the present invention will be described in detail using the drawings. It should be noted that handling of a nonperiodic signal will be described as handling of an irregular signal relative to a periodic signal in a first embodiment. In a second embodiment, handling of retransmission in addition to the nonperiodic signal will be described. In a third embodiment, a configuration for carrying out the present invention mainly by software using general-purpose hardware will be described.

[First embodiment]

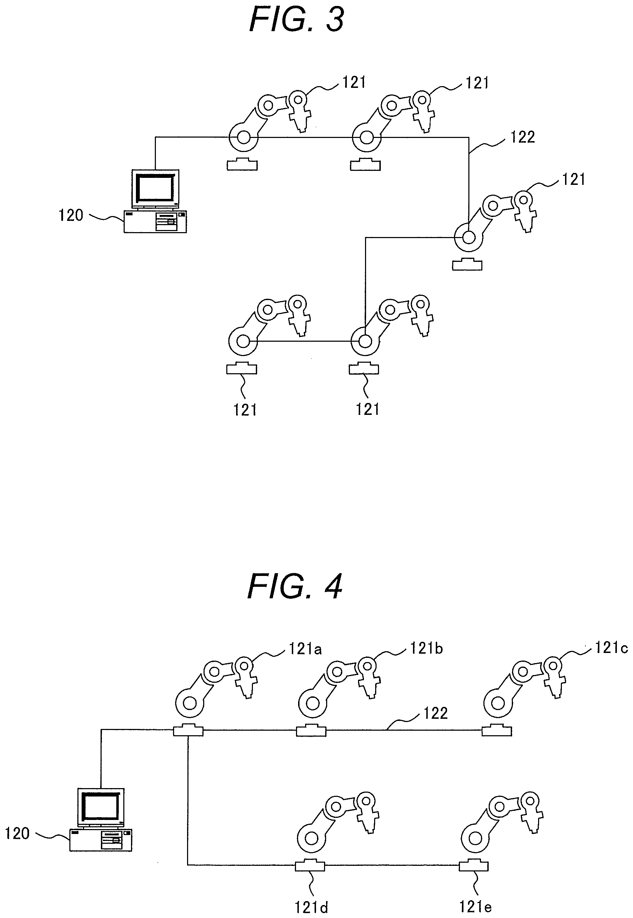

Each of Fig. 3 and Fig. 4 shows an example of a control system configured using a communication controller 120 to which the present invention is applied. The topology of a network 122 shown in Fig. 3 is different from that shown in Fig. 4. However, the present invention can be applied to those with other topology.

In each of the drawings, the present invention is applied to the communication controller 120 that transmits and receives a control command, management information, and the like to/from each of control devices 121 configuring the network 122.

Upon reception of the control command from the communication controller 120, each of the control devices 121 executes a control process. In addition, each of the control devices 121 communicates measured information, management information, and the like with the communication controller 120 if necessary. It should be noted that configurations using servo amplifiers and servomotors are exemplified as the control devices 121.

The network 122 allows the communication controller 120 to be connected to the control devices 121. As a concrete example of the network 122, Ethernet (Registered Trademark), Industrial Ethernet defined in IEC61784, CAN (Controller Area Network (Registered Trademark)), DeviceNet, RS-232C, RS-422, RS-485, or the like can be given. In the embodiment, EtherCAT ((Registered Trademark) Communication Profile Family 12 in IEC61784-2) will be described as an example of the network 122.

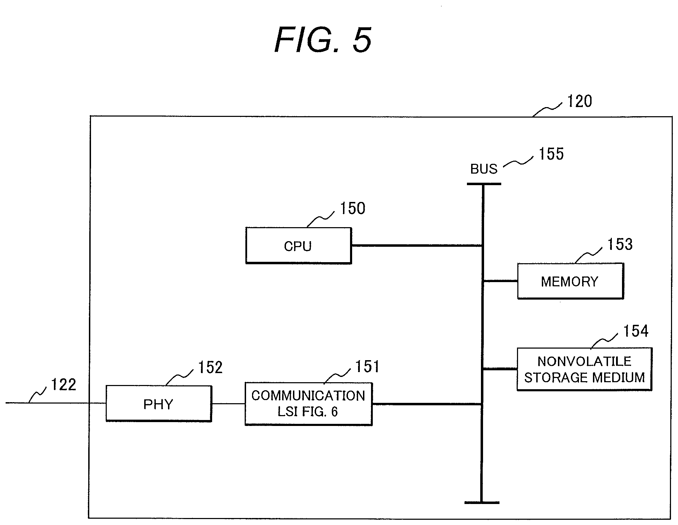

An embodiment of a hardware configuration of the communication controller 120 to which the present invention is applied is shown in Fig. 5. The communication controller 120 includes a physical layer 152 connected to the network 122, and a CPU 150, a memory 153, a nonvolatile storage medium 154, and a communication LSI 151 all of which are connected to each other through an internal bus 155.

Among these units, the CPU 150 transfers a program from the nonvolatile storage medium 154 to the memory 153 to execute a predetermined process. As a program to be executed and processed, an OS or an application program running on an OS can be exemplified.

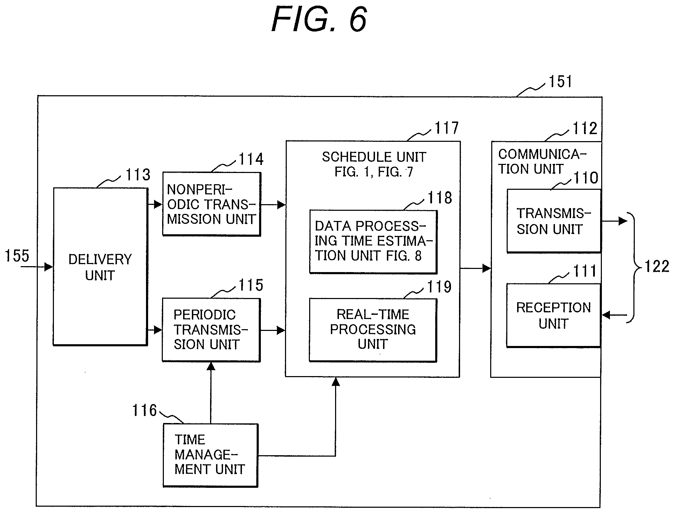

The communication LSI 151 receives a transmission request and transmission data from the program running on the CPU 150, and transmits the same to the network 122 using the physical layer 152. In addition, the communication LSI 151 transfers data received from the network 122 to the CPU 150, the memory 153, and the nonvolatile storage medium 154 via the bus 155. The communication LSI 151 will be described later in detail using Fig. 6. As an implementation example of the communication LSI 151, an IC such as FPGA (Field-Programmable Gate Array), CPLD (Complex Programmable Logic Device), ASIC (Application Specific Integrated Circuit), or a gate array can be exemplified. Alternatively, the communication LSI 151 may be integrated with the CPU 150.

The physical layer 152 is a transceiver IC implementing a communication function with the network 122. As a communication standard provided by the physical layer 152, a PHY (physical layer) chip of Ethernet can be exemplified. It should be noted that the physical layer 152 and the communication LSI 151 are connected to each other in the configuration of Fig. 5, and thus a process for a MAC (Media Access Control) layer of Ethernet is included in the communication LSI 151. However, effects of the present invention can be similarly obtained even in a configuration in which an IC providing a MAC function is arranged between the communication LSI 151 and the physical layer 152, or in a configuration in which a communication IC obtained by combining an IC providing a MAC function and the physical layer 152 is connected to the communication LSI 151.

In the configuration of Fig. 5, since the physical layer 152 is provided outside the communication LSI 151, a processing unit of the communication LSI 151 corresponding to the MAC layer corresponds to a communication unit 112 of Fig. 6 to be described later. However, the communication LSI 151 may be an Ethernet communication device including the MAC layer and the physical layer, or may include even a physical layer function.

The memory 153 is a temporary storage area for operations of the CPU 150, and an OS, and an application program, and the like transferred from the nonvolatile storage medium 154 are stored therein.

The nonvolatile storage medium 154 is a medium for storing information, and is used to store a program for operating the CPU 150 and to store execution results by a program.

The bus 155 allows the CPU 150, the memory 153, the nonvolatile storage medium 154, and the communication LSI 151 to be connected to each other. As the bus 155, a PCI bus, an ISA bus, a PCI Express bus, a system bus, a memory bus, or the like can be exemplified.

Fig. 6 shows an embodiment of a functional configuration of the communication LSI 151. The communication LSI 151 includes a periodic transmission unit 115 and a nonperiodic transmission unit 114 as will be described below in detail, and executes transmission by appropriately using the same.

In Fig. 6, the communication unit 112 is a functional unit that is connected to the network 122 to perform communications in accordance with the communication protocol of the network 122. A transmission unit 110 is a transmission functional unit in the communication unit 112, and transmits a packet from the communication controller 120 to the network 122. A reception unit 111 is a reception functional unit in the communication unit 112, and receives a packet transmitted from the network 122.

A delivery unit 113 is connected to the bus 155 of Fig. 5, and receives a transmission request and transmission data from a program running on the CPU 150. Specifically, the delivery unit 113 identifies data input to the communication LSI 151 in accordance with a predetermined method, and delivers the same to either or both of the nonperiodic transmission unit 114 and the periodic transmission unit 115.

As an identifying method to determine the functional unit to which the data are to be delivered, a method of expressing an identifier at a predetermined position of the data input from the CPU 150, or a method of specifying an identifier when the data are input to the communication LSI 151 can be exemplified. As a latter concrete example, a method of distinguishing by an address space presented in a PCI bus space, or a method of distinguishing by providing a burst transmission request for the communication LSI 151 at a different register can be exemplified in the case of the communication LSI 151 configured as a PCI (Peripheral Components Interconnect Bus) device.

Any one of the above-described identifying methods may be employed. In short, if the input data are a noncontrol command, the delivery unit 113 delivers the input data to the nonperiodic transmission unit 114. If the input data are a control command, the delivery unit 113 delivers the input data to the periodic transmission unit 115. If the input data include the noncontrol command and the control command, the delivery unit 113 delivers the input data to each of the nonperiodic transmission unit 114 and the periodic transmission unit 115.

The nonperiodic transmission unit 114 is a functional unit that stores therein a noncontrol command such as a request of obtaining management information and working information that need not be periodically transmitted from the communication controller 120 to the control devices 121. Upon reception of nonperiodic transmission data from the delivery unit 113, the nonperiodic transmission unit 114 notifies the schedule unit 117 of a transmission request. If the transmission is permitted by the schedule unit 117, the nonperiodic transmission data are transferred to the schedule unit 117.

The transmission request for the nonperiodic data is generated at any timing, and the data size can be arbitrarily set.

It should be noted that the format of the nonperiodic transmission data in the nonperiodic transmission unit 114 may be a format in which only data are contained, or a format in which a header or the like is provided so as to comply with the communication protocol of the network 122. In the case of managing with the format in which only data are contained, information such as a header may be provided by the communication unit 112 or the schedule unit 117.

Further, in the case of managing with the format in accordance with the communication protocol of the network 122, the nonperiodic transmission data in the format may be received from the delivery unit 113. Alternatively, only data may be received from the delivery unit 113, and a header may be provided so as to comply with the communication protocol of the network 122 in the nonperiodic transmission unit 114.

The periodic transmission unit 115 is a functional unit that stores therein a control command such as a request of obtaining an operating command and measured information that is periodically transmitted from the communication controller 120 to the control devices 121. Upon reception of periodic transmission data from the delivery unit 113, the periodic transmission unit 115 notifies the schedule unit 117 of a transmission request. If the transmission is permitted by the schedule unit 117, the periodic transmission data are transferred to the schedule unit 117.

The transmission request for the periodic data is generated in each predetermined period. The data size may be changed in each period.

The period in which the control command is transmitted is managed using a timer 116.

It should be noted that the format of the periodic transmission data in the periodic transmission unit 115 may be a format in which only data are contained, or a format in which a header or the like is provided so as to comply with the communication protocol of the network 122. In the case of managing with the format in which only data are contained, information such as a header may be provided by the communication unit 112 or the schedule unit 117.

Further, in the case of managing with the format in accordance with the communication protocol of the network 122, the periodic transmission data in the format may be received from the delivery unit 113. Alternatively, only data may be received from the delivery unit 113, and a header may be provided so as to comply with the communication protocol of the network 122 in the periodic transmission unit 115.

A time management unit 116 of Fig. 6 is a functional unit that manages time in the communication LSI 151. The time management unit 116 delivers time information to the periodic transmission unit 115 and the schedule unit 117. At this time, the time management unit 116 may notify these units of the current time or a fact that a predetermined period has elapsed in the delivery of the time information. Alternatively, the time management unit 116 may notify the schedule unit 117 of a difference between predetermined time information input from the schedule unit 117 and the current time.

In addition, the time managed by the time management unit 116maybe relative time as a timer for managing constant periods, or may be time synchronized with other control devices connected via the network 122 or other pieces of hardware connected to the bus 155. Alternatively, the time may be based on Greenwich Time or GPS time. Further, the time may be set and obtained from an application running on the CPU 150.

The schedule unit 117 compares a processing period of time for the transmission data of the nonperiodic transmission unit 114 having issued the transmission request, a processing period of time for the transmission data of the periodic transmission unit 115 having issued the transmission request, and a remaining period of time before the next transmission period of the periodic transmission unit 115 with each other to determine whether or not to permit each transmission request. Each processing period of time for the transmission data is calculated by a data processing time estimation unit 118. The remaining period of time before the next transmission period is obtained from the time management unit 116.

The data processing time estimation unit 118 estimates the processing period of time for the transmission data of the nonperiodic transmission unit 114 having issued the transmission request and the processing period of time for the transmission data of the periodic transmission unit 115 having issued the transmission request, and notifies the schedule unit 117 of the estimated processing periods of time. In each case, the processing period of time for the transmission data is estimated in such a manner that a processing period of time in a real-time processing unit is calculated based on, for example, the data size of the transmission data and a transmission period of time in the communication unit is added thereto.

A real-time processing unit 119 is a functional unit that processes the transmission data of the nonperiodic transmission unit 114, or the transmission data of the periodic transmission unit 115 in a predictable processing period of time to be transferred to the communication unit 112. For example, if the processing period of time per unit data size is fixed, the processing period of time can be calculated based on the input data size.

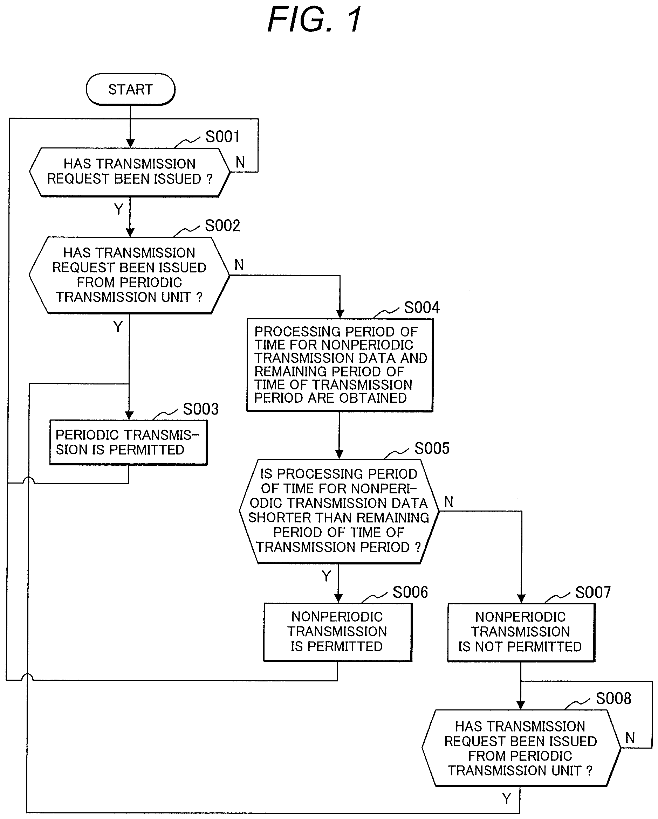

Execution procedures of the schedule unit 117 according to the present invention are shown in Fig. 1.

In the first place, the schedule unit 117 waits until a transmission request is issued (Step S001). Then, if the transmission request has been issued, it is determined whether or not the transmission request has been issued from the periodic transmission unit 115 (Step S002) . If the transmission request has been issued from the periodic transmission unit 115 (Y in the determination of Step S002), the transmission request is permitted (Step S003).

The determination result in Step S002 shows that the transmission request has not been issued from the periodic transmission unit 115 (N in the determination of Step S002), it means that the transmission request has been issued from the nonperiodic transmission unit 114. In this case, the transmission request is accepted to confirm that conditions and environments under which the transmission can be actually performed are set.

In order to confirm the conditions and environments, a processing period of time Ta for the transmission data of the nonperiodic transmission unit 114 is first obtained from the data processing time estimation unit 118 in Step S004, and a remaining period of time R before the next period of the periodic transmission unit 115 is obtained from the time management unit 116.

Next, the processing period of time Ta for the nonperiodic transmission data and the remaining period of time R of the transmission period are compared with each other in Step S005. If the processing period of time Ta for the nonperiodic transmission data is shorter than the remaining period of time R of the transmission period, the transmission can be performed in the current control period. Thus, the transmission request from the nonperiodic transmission unit 114 is permitted in Step S006.

If the processing period of time Ta for the nonperiodic transmission data is equal to or longer than the remaining period of time R of the transmission period in the determination of Step S005, it is impossible to perform the transmission in the current control period. In this case, the process moves to Step S007, and the transmission request from the nonperiodic transmission unit 114 is not permitted, but is to be processed later.

In this case, there is a possibility that a transmission request is issued from the periodic transmission unit 115 in the remaining period of time R of the current control period. Therefore, the schedule unit 117 waits until the transmission request is generated from the periodic transmission unit 115 in Step S008 after the process of Step S007. If the transmission request has been issued from the periodic transmission unit 115, the process moves to the Step S003, and the transmission request is permitted.

After the process of Step S003, the process returns to the processing procedure of Step S001. In this state, the transmission request from the nonperiodic transmission unit 114 determined as to be processed later in Step S007 has been left unprocessed. Thus, the processes of Step S001, Step S002, Step S004, and Step S005 are performed again, and the processing period of time Ta for the nonperiodic transmission data and the remaining period of time R of the transmission period are compared with each other. If the processing period of time Ta for the nonperiodic transmission data is shorter than the remaining period of time R of the transmission period as a result, the transmission request from the nonperiodic transmission unit 114 is permitted.

However, there is a possibility that the nonperiodic transmission data have been left unsent for a long period of time depending on the comparison result between the processing period of time Ta for the nonperiodic transmission data and the remaining period of time R of the transmission period. In this case, the number of times the transmission request from the nonperiodic transmission unit 114 has not been permitted is counted in Step S005 and Step S007. If the count becomes a predetermined number of times or larger, the schedule unit 117 may notify the nonperiodic transmission unit 114 of the fact.

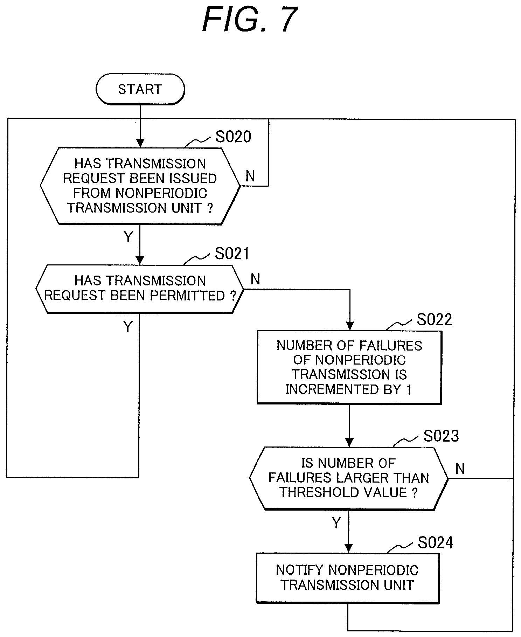

Operational procedures when the nonperiodic transmission data have been left unsent for a long period of time are shown in Fig. 7. In the first place, the schedule unit 117 waits for a transmission request from the nonperiodic transmission unit 114 in Fig. 7 (Step S020). If the transmission request has been issued from the nonperiodic transmission unit 114, it is determined then whether or not the transmission request has been permitted (Step S021).

If the transmission request has not been permitted, the number of failures of the transmission request from the nonperiodic transmission unit 114 is incremented by 1 in Step S022. Next, the number of failures is compared with a predetermined threshold value in Step S023. If the number of failures is smaller than the threshold value, the process returns to Step S020. If the number of failures is equal to or larger than the threshold value (Y), the process moves to Step S024, and the schedule unit 117 notifies the nonperiodic transmission unit 114 of the fact. If the number of failures is smaller than the threshold value (N), the process returns to Step S020 to continuously monitor the number of failures.

It should be noted that as the number of consecutive failures, the number of failures may be cleared or accumulated in the case where the transmission request from the nonperiodic transmission unit 114 has succeeded (Y in Step S021) . The number of failures is the number of transmission failures in the nonperiodic transmission unit 114, and suggests wrong settings in the communication LSI 151.

On the basis of the notification, the nonperiodic transmission unit 114 may discard the transmission data, or may notify the CPU 150 connected to the bus 155 of interruption. An application running on the CPU 150 that is notified of the interruption can take measures such as discarding the data of the nonperiodic transmission-unit 114, retransmitting the nonperiodic transmission data, dividing and downsizing the nonperiodic transmission data, and making the transmission period of the periodic transmission unit 115 longer.

Further, the procedures of Fig. 7 may be conducted in the nonperiodic transmission unit 114. Furthermore, in the comparison between the number of failures and the threshold value, the process may return to Step S020 when the number of failures is equal to or smaller than the threshold value in Step S023.

The following is a summarized communication control method executed by the communication LSI 151 through the operational processing procedures of Fig. 1 and Fig. 7.

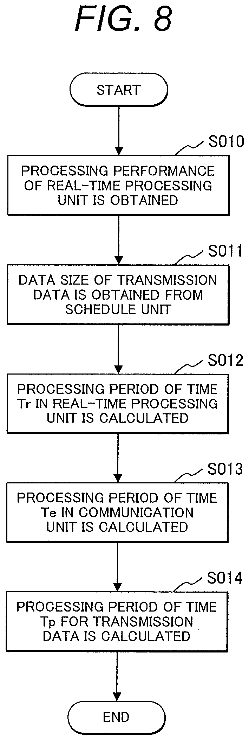

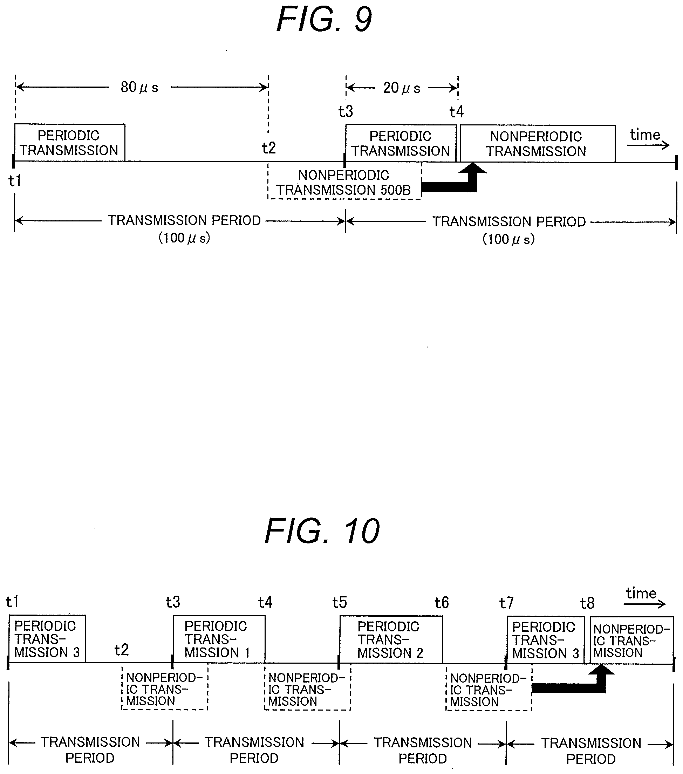

In the first place, a periodic transmission signal is transmitted in each of constant periods as shown in Fig. 9. When a nonperiodic transmission signal generated at any time is transmitted, a first remaining period of time (for example, between t2 and t3) between the time (for example, t2) the transmission request for the nonperiodic transmission signal is generated in the constant period and the time the next constant period starts, and a period of time (Tp in Fig. 8) required to transmit the nonperiodic transmission signal are obtained. Then, after confirming that the transmission can be completed in the first remaining period of time, the nonperiodic transmission signal is transmitted in the range of the constant period.

In addition, if the first remaining period of time (between Time t2 and Time t3) is not sufficient to transmit the nonperiodic transmission signal in the constant period in which the transmission request for the nonperiodic transmission signal has been generated as shown in Fig. 9, a second remaining period of time (after t4) obtained by subtracting the period of time (between Time t3 and Time t4) required to transmit the periodic transmission signal from the next constant period or thereafter is compared with the period of time required to transmit the nonperiodic transmission signal, so that the nonperiodic transmission signal is transmitted in the next constant period or thereafter.

Next, an estimation method of the processing period of time of the data processing time estimation unit 118 is shown in Fig. 8.

In the first place, the data processing time estimation unit 118 obtains a processing performance $\alpha$ of the real-time processing unit 119 in Step S010. As an index of the processing performance $\alpha$, for example, a data size processed per unit time is used.

Next, if the transmission request has been issued, the data processing time estimation unit 118 obtains a data size D of the transmission data from the schedule unit 117 in Step S011.

A processing period of time Tr is calculated in Step S012 in accordance with Equation (1) using the obtained processing performance $\alpha$ and data size D.

[Equation 1]

$$Tr = D / \alpha \cdots (1)$$

It should be noted that in the case where a header or the like in accordance with the communication protocol of the network 122 is provided to the transmission data in the real-time processing unit 119, the processing period of time Tr is calculated in accordance with Equation (2) in consideration of the processing period of time.
[Equation 2]

$$Tr=D/\alpha+B\cdots(2)$$

In Equation 2, B represents a period of time required to provide the header or the like, and is a term independent from the data size D. Alternatively, in the case where the transmission data are composed of multiple pieces of sub-data and are processed for each sub-data, B is a term dependent on the number of pieces of sub-data.

Next, a processing period of time Te in the communication unit 112 is calculated in Step S013. For example, the processing period of time Te is calculated in accordance with Equation (3) if 100Mbps Ethernet (Registered Trademark) is used.
[Equation 3]

$$Te=D/100Mbps\cdots(3)$$

Then, the processing period of time Tp for the transmission data is calculated in accordance with Equation (4) in Step S014.
[Equation 4]

$$Tp=Tr+Te+A\cdots(4)$$

It should be noted that A is a predetermined safe factor. A includes a period of time required to perform an estimation process of the data processing time estimation unit 118 itself shown in Fig. 6, a gap between frames of Ethernet (Registered Trademark), and a safe factor in consideration of an overhead other than the transmission processes of the real-time processing unit 119 and the communication unit 112.

Handling in time series when executing the operational procedures shown in Fig. 1 and Fig. 8 is shown in Fig. 9. Fig. 9 is a diagram for showing scheduling of transmission data in the schedule unit 117 by means of a time axis. In this case, the transmission period of the periodic transmission unit 115 is assumed as 100μs.

The previous transmission period ends at Time t1, and a transmission request from the periodic transmission unit 115 is permitted to transmit the periodic transmission data.

Next, it is assumed that a transmission request has been issued from the nonperiodic transmission unit 114 at Time t2 in the transmission period. At this time, it is assumed that t2 is a point at which 80μs has elapsed from t1, and the size of the nonperiodic transmission data is 500B. It is assumed that the processing performance α of the real-time processing unit 119 is 200MB/s, and the processing period of time Tr is obtained in accordance with Formula (1). If the processing period of time for the data is calculated in accordance with the procedures shown in Fig. 8, the processing period of time Tp for the transmission data is shown by Equation (5) . It should be noted that A is 0.
[Equation 5]

$$\begin{aligned}Tp&=Tr+Te+A\\&=500B/(200MB/s)+500B/100Mbps+0\\&=2.5\mu s+40\mu s\\&=42.5\mu s\cdots(5)\end{aligned}$$

Thus, the processing period of time Ta for the nonperiodic transmission data is 42.5μs in the determination procedures of the schedule unit shown in Fig. 1. On the other hand, the remaining period of time R of the transmission period, namely, a difference between Time t2 and Time t3 as the start point of the next period is 20μs.

The above-described calculation results show that the processing period of time Ta for the nonperiodic transmission data is longer than the remaining period of time R of the transmission period in the determination of Step S005 in Fig. 1, and thus the determination procedure moves to Step S007 in which the transmission request from the nonperiodic transmission unit 114 is not permitted. Accordingly, the nonperiodic transmission data are not transmitted in the transmission period starting from Time t1.

Subsequently, the schedule unit 117 waits for another transmission request from the periodic transmission unit 115 generated at Time t3 in Step S008 . Thereafter, the transmission request from the periodic transmission unit 115 is permitted, and the periodic transmission data are transmitted. The transmission of the periodic transmission data is completed at Time t4.

In the operational procedures of Fig. 1, the transmission request for the nonperiodic transmission data that have been left unsent in Step S007 is processed in Step S001 at Time t4 in the transmission period starting from Time t3. Thereafter, the process proceeds to Step S002 and S004 in which the transmission request from the nonperiodic transmission unit 114 is scheduled again. It is assumed that an interval between Time t4 and Time t3 is 20μs.

The remaining period of time of the transmission period is 80μs at Time t4, and the processing period of time Ta for the nonperiodic transmission data is shorter than the remaining period of time R of the transmission period in Step S005. Thus, the transmission request from the nonperiodic transmission unit 114 is permitted, and the nonperiodic transmission data are transmitted.

It should be noted that an interval between Time t4 and Time t3 is 20μs in Fig. 9, but it is not necessary to fix the size of the transmission data of the periodic transmission unit 115. Thus, even if the size of the nonperiodic transmission data is relatively large, the schedule unit 117 automatically determines a period including a vacant time in which the nonperiodic transmission data can be transmitted, and the nonperiodic transmission data can be transmitted.

In the example of Fig. 10, there are three kinds of transmission data sizes, namely, periodic transmission 1, periodic transmission 2, and periodic transmission 3, and are not the same. Thus, Fig. 10 shows an example in which the remaining periods of time R of the transmission periods are different in the respective cases. However, the transmission is repeated in the order of the sizes of the transmission data in this example.

In such a case, it is assumed that a transmission request for the nonperiodic transmission data with a relatively-large size has been issued. In the case of Fig. 10, the operations from Time t1 to Time t4 are the same as those in Fig. 9. However, the nonperiodic transmission data are prevented from being transmitted in the remaining period of time R of the transmission period starting from Time t4 because the transmission is determined as impossible. In addition, the nonperiodic transmission data are prevented from being transmitted in the next transmission period. Finally, the nonperiodic transmission data can be transmitted in the transmission period including the periodic transmission 3.

If there are N (3 in Fig. 10) kinds of sizes of the periodic transmission data, the nonperiodic transmission data can be transmitted in N+1 periods. If the nonperiodic transmission data cannot be transmitted in N+1 periods, there exist no periods thereafter in which the nonperiodic transmission data can be transmitted. It should be noted that N+1 is used instead of N because the timing of the first transmission request is arbitrary.

It should be noted that the data processing time estimation unit 118 is provided in the schedule unit 117 in the embodiment. However, the data processing time estimation unit 118 may be provided in each of the nonperiodic transmission unit 114 and the periodic transmission unit 115. The nonperiodic transmission unit 114 and the periodic transmission unit 115 notify the schedule unit 117 of the data size as well as the transmission request in the embodiment. However, the operational procedures of Fig. 1 and Fig. 8 may be executed in the nonperiodic transmission unit 114 and the periodic transmission unit 115, and the schedule unit 117 may be notified of the processing period of time for the transmission data as well as the transmission request in the case where the data processing time estimation unit 118 is provided in each of the nonperiodic transmission unit 114 and the periodic transmission unit 115.

In addition, one or more nonperiodic transmission units 114 and periodic transmission units 115 may be provided in the embodiment. In this case, it is necessary to specify priorities among the respective functional units.

Effects obtained by the above-described embodiment will be described.

Even if a transmission request for nonperiodic transmission has been issued at any timing, the schedule unit 117 compares the processing period of time for the nonperiodic transmission data with the remaining period of time of the transmission period to determine whether to permit the transmission request. Accordingly, the periodic transmission data can be periodically transmitted with a high degree of accuracy without the influence of the nonperiodic transmission.

Further, since the transmission timing is automatically adjusted by the schedule unit 117, the nonperiodic transmission data can be set at the communication LSI 151 at a given timing from an application running on the CPU 150. Accordingly, it is not necessary to sacrifice the development efficiency of an application that sets the nonperiodic transmission data in order to maintain the accuracy of the periodic transmission.

Further, it is not necessary to set a time slot for the nonperiodic transmission on the network 122. Thus, the transmission period can be made shorter and the control performance can be improved. Further, if the transmission period is made excessively short, the failure of the nonperiodic transmission is detected in the procedures of Fig. 7, so that optimization such as changing the size of the transmission data of the nonperiodic transmission and adjusting the transmission period can be performed.

[Second embodiment]

In a second embodiment, a retransmission function for the periodic transmission data is provided in the communication LSI 151 to improve data transmissibility in the periodic transmission as compared to the first embodiment. The reference numerals and signs used in the second embodiment are the same as those of the functions and elements described in the first embodiment unless otherwise specified.

An example of a control system configured using the communication controller 120 to which the second embodiment is applied is the same as those of Fig. 3 and Fig. 4. Further, the hardware configuration of the communication controller 120 is the same as that of Fig. 5.

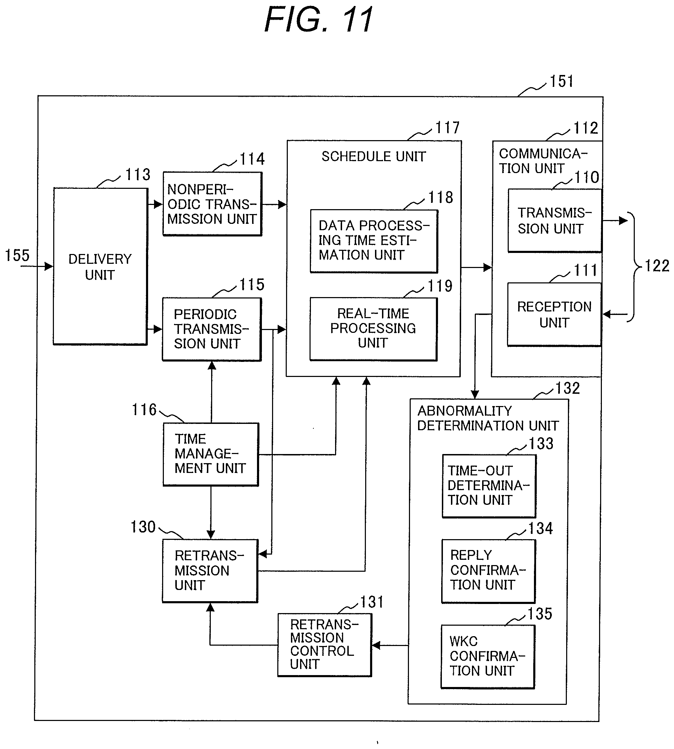

Fig. 11 shows an embodiment of a functional configuration of the communication LSI 151 to which the present invention is applied. The configuration of Fig. 11 is obtained by adding the retransmission function for the periodic transmission data to the configuration (the delivery unit 113, the nonperiodic transmission unit 114, the periodic transmission unit 115, the schedule unit 117, and the communication unit 112) of the first embodiment shown in Fig. 6. The existing configuration has been already described in Fig. 6, and thus the retransmission function for the periodic transmission data will be mainly described below.

The retransmission function for the periodic transmission data is configured mainly using an abnormality determination unit 132, a retransmission control unit 131, a retransmission unit 130, and a time management unit 116. When the abnormality determination unit 132 detects a communication abnormality, the outline function determines that a signal has not been correctly transmitted to the control device side, and prompts the periodic transmission unit 115 and the schedule unit 117 to retransmit the periodic transmission data.

In order to execute the above-described control, the abnormality determination unit 132 first detects the communication abnormality. Thus, the abnormality determination unit 132 is a functional unit that determines success or failure of the periodic transmission of the periodic transmission unit 115 on the basis of the content of data received from the reception unit 111 of the communication unit 112 or on the basis of elapsed time. The abnormality determination unit 132 notifies the retransmission control unit 131 of the determination result. It should be noted that a concrete method of detecting the communication abnormality will be described in detail later.

The retransmission control unit 131 is a functional unit that, upon reception of the determination result by the abnormality determination unit 132, requests the retransmission unit 130 to retransmit, or requests to delete the transmission data stored in the retransmission unit 130.

When the periodic transmission unit 115 transfers the transmission data to the schedule unit 117, the retransmission unit 130 receives the transmission data to be stored therein. If a retransmission request is issued from the retransmission control unit 131, the retransmission unit 130 requests the schedule unit 117 to retransmit.

It should be noted that when the transmission data of the periodic transmission unit 115 are stored in the retransmission unit 130, or when the transmission data are output after the retransmission is permitted by the schedule unit 117, the transmission data may be changed in order to represent the data as retransmission data. As a concrete example thereof, an area representing the retransmission is defined in the transmission data or the header, and a parameter representing the data as retransmission data is defined.

Further, the retransmission unit 130 may delete the transmission data stored therein after being notified of elapse of the transmission period of the periodic transmission unit 115 from the time management unit 116. This scheme is exemplified in a system in which retransmission needs to be performed in a period. Further, a function corresponding to the retransmission unit 130 may be provided in the periodic transmission unit 115.

Hereinafter, a concrete example of the abnormality determination unit 132 will be described first among the respective functions. Some detecting functions for the communication abnormality have been already known. However, the following function will be exemplified in the embodiment.

In the first place, a time-out determination unit 133 monitors elapsed time from the start of the periodic transmission of the periodic transmission unit 115 to determine whether or not a predetermined period of time has elapsed. If the periodic transmission data have been received by the abnormality determination unit 132 within a predetermined period of time from the start of the transmission, the monitoring of the elapsed time is stopped to determine that the periodic transmission data have been received in time. On the contrary, if the periodic transmission data have not been received by the abnormality determination unit 132 within a predetermined period of time, it is determined that the communications have not been correctly performed.

Upon reception of a reply from the control device 121 having received the periodic transmission from the communication controller 120, a reply confirmation unit 134 determines whether or not the periodic transmission has succeeded. If the control device 121 has correctly received the periodic transmission, the control device 121 transmits an acknowledgement represented as ACK to the communication controller 120. Alternatively, if the control device 121 has not correctly received the periodic transmission from the communication controller 120, the control device 121 transmits a negative acknowledgement represented as NACK to the communication controller 120.

A WKC confirmation unit 135 determines whether or not the periodic transmission has been correctly processed by the control device 121 on the basis of whether or not a predetermined counter (Working counter abbreviated as WKC) on a frame replied from the control device 121 is equal to an expected value. This scheme is used by EtherCAT. The counter is a field on an EtherCAT packet that is incremented by a predetermined number by the control device 121 every time the transmission data are correctly processed by the control device 121. It should be noted that it is necessary to set the expected value in advance.

Next, a relation between the configuration of the abnormality determination unit 132 and the network system will be described. The abnormality determination unit 132 of Fig. 11 is configured using one or more of the time-out determination unit 133, the reply confirmation unit 134, and the WKC confirmation unit 135. However, the method of determining whether or not the periodic communication has been correctly processed by the control device 121 is not limited to that performed by the time-out determination unit 133, the reply confirmation unit 134, and the WKC confirmation unit 135. In the case of Ethernet, for example, if an abnormality is detected in CRC for a received frame or in a packet format, it may be determined that the periodic communication has not been correctly performed.

It should be noted that the configurations of the time-out determination unit 133, the reply confirmation unit 134, and the WKC confirmation unit 135 in the abnormality determination unit 132 differ depending on the kind of network systems.

In the case of EtherCAT, for example, a communication frame transmitted from the communication controller 120 passes through the control devices 121 in order, and returns to the communication controller 120 after passing through the all control devices 121. Due to such a characteristic, it is preferable to use the WKC confirmation unit 135. Further, it is also preferable to employ the time-out determination unit 133 due to the possibility of a packet loss on the network.

On the other hand, in the case where the specification of the network 122 does not necessarily define that the control devices 121 need to reply to the communication controller 120, the acknowledgement or negative acknowledgement is expressly replied from the communication controller 120 using the reply confirmation unit 134 and the time-out determination unit 133.

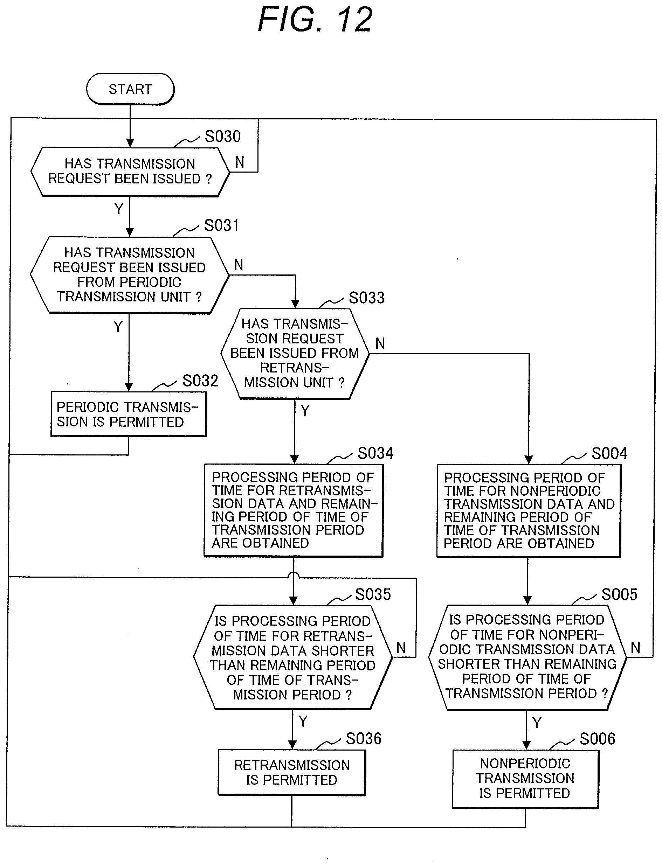

In order to realize the retransmission of the periodic transmission data, the communication controller needs to include the above-described functions (the abnormality determination unit 132, the retransmission control unit 131, the retransmission unit 130, and the time management unit 116) in terms of hardware. With such a configuration, the following operational procedures shown in Fig. 12 are executed by the schedule unit 117.

First of all, the schedule unit 117 waits for a transmission request (Step S030). Then, if the transmission request has been issued, it is determined whether or not the transmission request has been issued from the periodic transmission unit 115 (Step S031). If the transmission request has been issued from the periodic transmission unit 115 (Y), the process moves to Step S032 to permit the request. Accordingly, the periodic data are transmitted from the transmission unit 110 to the control device 121, and the abnormality determination unit 132 monitors that the communications are correctly performed. If the communication abnormality has occurred, a retransmission request is supposed to be issued from the retransmission unit 130.

If it is determined in Step S031 that the transmission request has not been issued from the periodic transmission unit 115 (N), the transmission request has been issued from the nonperiodic transmission unit 114 or the retransmission unit 130. Thus, it is determined in Step S033 whether or not the transmission request has been issued from the retransmission unit 130.

If it is found in Step S033 that the transmission request has been issued from the retransmission unit 130, a processing period of time Tb for the transmission data of the retransmission unit 130 is obtained from the data processing time estimation unit 118 in Step S034, and the remaining period of time R before the next period of the periodic transmission unit 115 is obtained from the time management unit 116. It should be noted that the process in Step S034 is the same as that in Step S004 except that the data to be handled are changed from the nonperiodic transmission data to the retransmission data.

Next, the processing period of time Tb for the retransmission data and the remaining period of time R of the transmission period are compared with each other in Step S035. If the processing period of time Tb for the retransmission data is shorter than the remaining period of time R of the transmission period (Y), the transmission request from the retransmission unit 130 is permitted in Step S036. It should be noted that the process in Step S035 is the same as that in Step S005 except that the data to be handled are changed from the nonperiodic transmission data to the retransmission data.

If the processing period of time Tb for the retransmission data is equal to or longer than the remaining period of time R of the transmission period in Step S035, the processing procedure returns to Step S030 without permitting the transmission request from the retransmission unit 130.

If the transmission request has been issued from the nonperiodic transmission unit 114 in Step S033, the processing period of time Ta for the transmission data of the nonperiodic transmission unit 114 is obtained from the data processing time estimation unit 118, and the remaining period of time R before the next period of the periodic transmission unit 115 is obtained from the time management unit 116 (Step S004). Next, the processing period of time Ta for the nonperiodic transmission data and the remaining period of time R of the transmission period are compared with each other (Step S005). If the processing period of time Ta for the nonperiodic transmission data is shorter than the remaining period of time R of the transmission period, the transmission request from the nonperiodic transmission unit 114 is permitted (Step S006).

If the processing period of time Ta for the nonperiodic transmission data is equal to or longer than the remaining period of time R of the transmission period in Step S005, the processing procedure returns to Step S030 without permitting the transmission request from the nonperiodic transmission unit 114.

The embodiment of Fig. 12 has been described above. According to the method, the periodic transmission data are transmitted first, and then the retransmission data or the nonperiodic transmission data are transmitted within a remaining period of time thereafter. Therefore, it is necessary to study handling in the case where transmission requests for the retransmission data and nonperiodic transmission data are issued in the same transmission period.

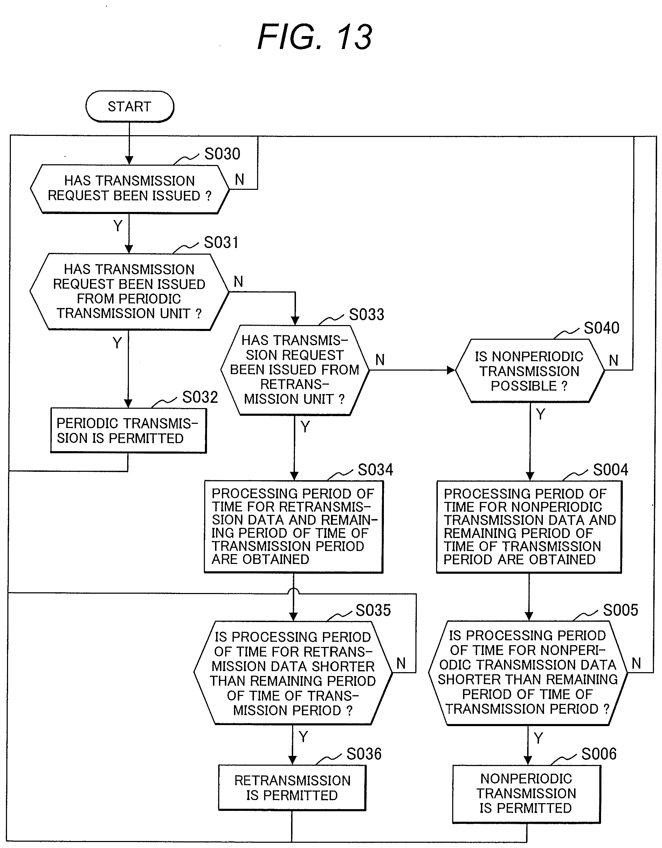

Fig. 13 shows operational execution procedures of the schedule unit 117 when the retransmission is given priority over the nonperiodic transmission.

Fig.13 is different from Fig. 12 in that Step S040 is provided. In Step S040, it is determined whether or not the nonperiodic transmission is possible due to the relation with the retransmission. As an example, the determination is made based on such criteria as whether or not the retransmission has been performed the predetermined number of times, whether or not the periodic transmission has been correctly performed, and whether or not a predetermined period of time (time slot in which the retransmission is given priority) has elapsed after the periodic transmission.

It should be noted that the number of periods in which the transmission request from the nonperiodic transmission unit 114 has not been permitted is counted in Fig. 12 and Fig. 13. If the number becomes a predetermined number or larger, the nonperiodic transmission unit 114 may be notified of the fact. This procedures are the same as those in Fig. 7.

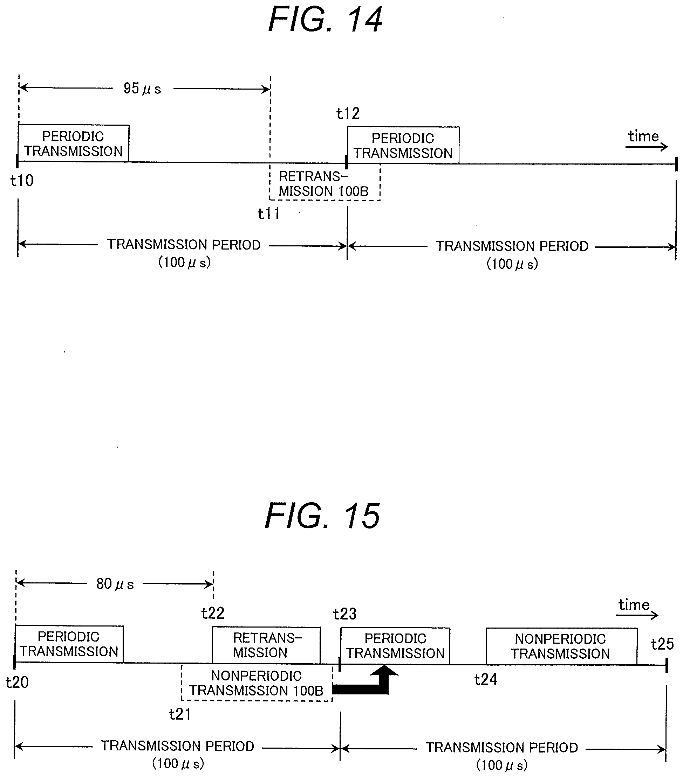

Handling in time series when executing the operational procedures shown in Fig. 12 is shown in Fig. 14. Fig. 14 is a diagram for showing scheduling of transmission data in the schedule unit 117 by means of a time axis. In this case, the transmission period of the periodic transmission unit 115 is assumed as $100\mu s$.

The previous transmission period ends at Time t10, and a transmission request from the periodic transmission unit 115 is permitted in a new transmission period to transmit the periodic transmission data. This process is executed in Step S030 to Step S032.

Next, it is assumed that a transmission request from the retransmission unit 130 has been issued at Time t11. At this time, it is assumed that t11 is a point at which $95\mu s$ has elapsed from t10, and the size of the retransmission data is 100B. It is assumed that the processing performance $\alpha$ of the real-time processing unit 119 is 200MB/s, and the processing period of time for the data is calculated in accordance with the procedures shown in Fig. 8. The processing period of time Tp for the transmission data is shown by Formula (6) . It should be noted that A is 0.
[Formula 6]

$$Tp=Tr+Te+A$$

$$=100B/(200MB/s)+100B/100Mbps+0$$

$$=0.5\mu s+8\mu s$$

$$=8.5\mu s\cdots(6)$$

Thus, in the determination procedures performed by the schedule unit shown in Fig. 12, the processing period of time Tb for the retransmission data is $8.5\mu s$. On the other hand, the remaining period of time R of the transmission period, namely, a difference between Time t11 and Time t12 as the start point of the next period is $5\mu s$.

The above-described calculation results show that the processing period of time Tb for the retransmission data is longer than the remaining period of time R of the transmission period, and thus the transmission request from the retransmission unit 130 is not permitted. A series of processes are executed in Step S033 to Step S036.

It should be noted that if the retransmission control unit 131 deletes the transmission data of the retransmission unit 130 at Time t12, the retransmission request from the retransmission unit 130 is cancelled from Time t12.

A concrete example of operations in the embodiment shown in Fig. 13 is shown in Fig. 15. Fig. 15 is a diagram for showing scheduling of transmission data in the schedule unit 117 by means of a time axis. In this case, it is assumed that the transmission period of the periodic transmission unit 115 is $100\mu s$.

The previous transmission period ends at Time t20, and a transmission request from the periodic transmission unit 115 is permitted in a new transmission period to transmit the periodic transmission data. This process is executed in Step S030 to Step S032.

Next, it is assumed that a transmission request has been issued from the nonperiodic transmission unit 114 at Time t21. Accordingly, the process moves to Step S040 in the processing procedures of Fig. 13. In Step S040, it is determined whether or not the nonperiodic transmission is possible. However, it is assumed at this time that the retransmission has not succeeded, and the nonperiodic transmission is not possible. Therefore, the transmission request from the nonperiodic transmission unit 114 is not permitted at Time t21 in the determination of Step S040.

Next, it is assumed that a transmission request has been issued from the retransmission unit 130 at Time t22. Accordingly, the process moves from Step 033 to Step S034 in the processingprocedures of Fig. 13. At this time, it is assumed that Time t22 is a point at which $80\mu s$ has elapsed from Time t20, and the size of the retransmission data is 100B. It is assumed that the processing performance $\alpha$ of the real-time processing unit 119 is 200MB/s, and the processing period of time for the data is calculated in accordance with the procedures shown in Fig. 8. The processing period of time Tp for the transmission data is shown by Formula (6) . It should be noted that A is 0.

Thus, in the determination procedures performed by the schedule unit shown in Fig. 11, the processing period of time Tb for the retransmission data is $8.5\mu s$. On the other hand, the remaining period of time R of the transmission period, namely, a difference between Time t22 and Time t23 as the start point of the next period is $20\mu s$. Thus, the transmission request from the retransmission unit 130 is permitted due to a sufficient remaining period of time, and the retransmission from the retransmission unit 130 is performed.

Next, the previous transmission period ends at Time t23, and a transmission request from the periodic transmission unit 115 is permitted in a new transmission period to transmit the periodic transmission data. This process is executed in Step S030 to Step S032.

Thereafter, it is assumed that the periodic transmission has been correctly performed at Time t24. At this time, it is assumed that the transmission request has been continuously issued from the nonperiodic transmission unit 114. Thus, the process moves from Step S033 to Step S004 through Step S040 in the processing procedures of Fig. 13. At this time, it is assumed that Time t24 is a point at which $30\mu s$ has elapsed from Time t23, and the size of the nonperiodic transmission data is 500B. It is assumed that the processing performance $\alpha$ of the real-time processing unit 119 is 200MB/s. The processing period of time Tp for the transmission data is $42.5\mu s$ as shown by Formula (5).

In the determination procedures performed by the schedule unit shown in Fig. 13, the processing period of time Ta for the nonperiodic transmission data is $42.5\mu s$. On the other hand, the remaining period of time R of the transmission period, namely, a difference between Time t24 and Time t25 as the start point of the next period is $70\mu s$.

Thus, the processing period of time Ta for the nonperiodic transmission data is shorter than the remaining period of time R of the transmission period, and thus the transmission request from the nonperiodic transmission unit 114 is permitted to transmit the nonperiodic transmission data.

It should be noted that the data processing time estimation unit 118 is provided in the schedule unit 117 in the embodiment. However, the data processing time estimation unit 118 may be provided in each of the nonperiodic transmission unit 114, the periodic transmission unit 115, and the retransmission unit 130. The nonperiodic transmission unit 114, the periodic transmission unit 115, and the retransmission unit 130 notify the schedule unit 117 of the data size as well as the transmission request in the embodiment. However, the procedures of Fig. 8 may be executed in the nonperiodic transmission unit 114, the periodic transmission unit 115, and the retransmission unit, and the schedule unit 117 may be notified of the processing period of time for the transmission data as well as the transmission request in the case where the data processing time estimation unit 118 is provided in each of the nonperiodic transmission unit 114, the periodic transmission unit 115, and the retransmission unit 130.

Further, one or more nonperiodic transmission units 114, periodic transmission units 115, and retransmission units 130 may be provided in the embodiment. In this case, it is necessary to specify priorities among the respective functional units. Further, if multiple periodic transmission units 115 and retransmission units 130 are provided, for example, an identifier is provided in a packet.

The following is a summarized communication control method executed by the communication LSI 151 through the operational processing procedures of Fig. 12 and Fig. 13.

Here, a periodic transmission signal is transmitted in each of constant periods (t10 and t12) as shown in Fig. 14. If the periodic transmission signal fails to be transmitted, a third remaining period of time (between t11 and t12) between the time (t11) the failure has been detected and the time the next constant period starts, and a processing period of time required to retransmit the periodic transmission signal are obtained. Then, after confirming that the retransmission can be completed in the third remaining period of time, the periodic transmission signal is retransmitted.

Further, when transmitting the nonperiodic transmission signal that is generated at any time, the first remaining period of time (between t2 and t3) between the time (t2) the transmission request for the nonperiodic transmission signal is generated in the constant period and the time the next constant period starts, and a period of time required to transmit the nonperiodic transmission signal are obtained as shown Fig. 9. Then, after confirming that the transmission can be completed in the first remaining period of time, the nonperiodic transmission signal is transmitted in the range of the constant period.

Further, in the case of performing retransmission and transmission of the nonperiodic transmission signal, if a retransmission request for the periodic transmission signal and a transmission request for the nonperiodic transmission signal are issued in the same constant period (between t20 and t23) as shown in Fig. 15, the retransmission of the periodic transmission signal is given priority (t22), and the transmission of the nonperiodic transmission signal is performed in the next constant period (t24) or thereafter if there is no period of time for transmitting the nonperiodic transmission signal in the same constant period.

Further, if the periodic transmission signal fails to be transmitted and cannot be transmitted within the third remaining period of time, the periodic transmission signal having the content is discarded, and another periodic transmission signal having new content is transmitted in the next constant period.

Effects obtained by the above-described embodiment will be described.

Even if a transmission request for the nonperiodic transmission signal or retransmission is generated at any timing, the schedule unit 117 compares the processing period of time for the nonperiodic transmission data or the processing period of time for the retransmission data with the remaining period of time of the transmission period to determine the permission of the transmission request. Accordingly, the periodic transmission signal can be periodically transmitted with a high degree of accuracy without the influence of the nonperiodic transmission and the retransmission.

Further, since the transmission timing is automatically adjusted by the schedule unit 117, the nonperiodic transmission data can be set at the communication LSI 151 at any timing from an application running on the CPU 150. Accordingly, it is not necessary to sacrifice the development efficiency of an application that sets the nonperiodic transmission data in order to maintain the accuracy of the periodic transmission.

Further, it is not necessary to set a time slot for the nonperiodic transmission on the network 122. Thus, the transmission period can be made shorter and the control performance can be improved. Further, if the transmission period is made excessively short, the failure of the nonperiodic transmission is detected in the procedures of Fig. 7, so that optimization such as changing the size of the transmission data of the nonperiodic transmission and adjusting the transmission period can be performed.

Further, the retransmission becomes available as long as the transmission accuracy of the periodic transmission can be maintained. Thus, data transmissibility from the communication controller 120 to the control devices 121 can be improved, and the high reliability and high performance of the control system can be realized.

Further, the retransmission is given priority over the nonperiodic transmission. Thus, the retransmission can be performed without the influence of the nonperiodic transmission, and advantages obtained by the retransmission can be enhanced.

It should be noted that in Fig. 11 for showing a typical device configuration of the second embodiment, the nonperiodic transmission unit 114 is a unit that performs the nonperiodic transmission of a noncontrol command. The time management unit 116, the retransmission unit 130, the retransmission control unit 131, and the abnormality determination unit 132 are transmission units that handle a retransmission command when transmission fails. In the explanation of the present invention, the noncontrol command or the retransmission command are handled as the nonperiodic transmission signals whereas the control command is handled as the periodic transmission signal. Therefore, the above-described circuits should be called as nonperiodic signal transmission units in a broader concept. Thus, some circuits handle the noncontrol command, and other circuits handle the retransmission.

[Third embodiment]

In a third embodiment, the present invention is carried out mainly by software using general-purpose hardware as compared to the first embodiment and the second embodiment. The reference numerals and signs used in the third embodiment are the same as those of the functions and elements described in the first embodiment and the second embodiment unless otherwise specified.

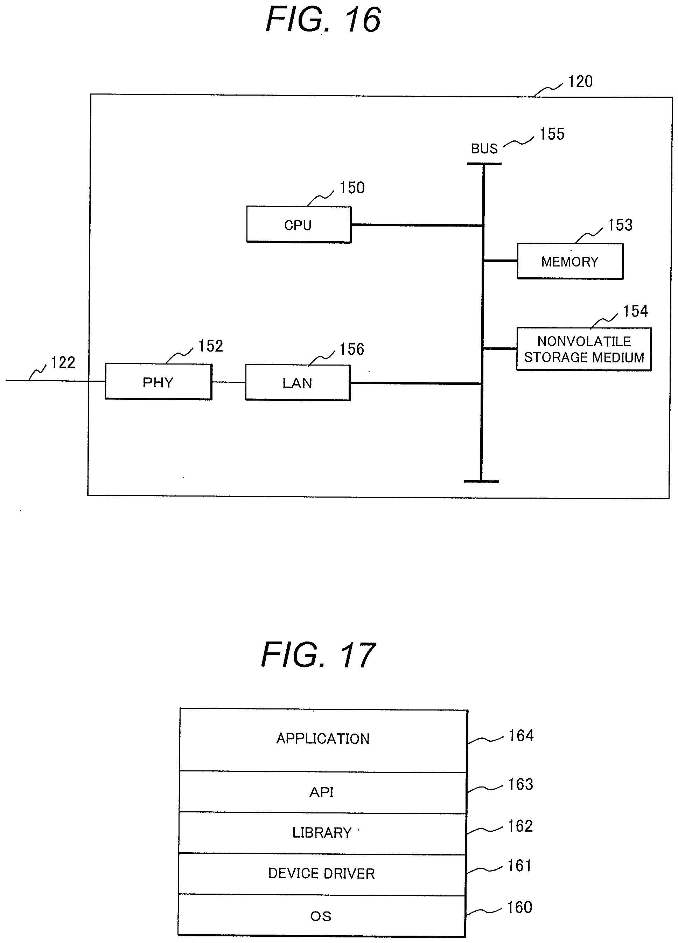

An example of a system configured using the communication controller 120 is the same as those in Fig. 3 and Fig. 4. A hardware configuration of the communication controller 120 is shown in Fig. 16. The communication controller 120 of Fig. 16 is different from that of Fig. 5 in that a LAN 156 is provided instead of the communication LSI 151.

The LAN 156 is a transceiver IC in which a function of communications with the network 122 is implemented. As a communication standard provided by the LAN 156, Ethernet or the like is exemplified.

A software configuration of the present invention including a software configuration running on the CPU 150 of Fig. 16 is shown in Fig. 17.

In Fig. 17, an OS 160 provides basic functions such as program management and access to hardware. The OS 160 is not always essential, but is preferably used because the OS 160 provides basic functions such as use of general-purpose applications and existing software assets, and task management. Further, it is preferable to use a real-time OS that can execute task scheduling under time restrictions.

A device driver 161 provides the LAN 156 with a function of accessing a communication data area, operation management information, and status information using means to access hardware provided by the OS 160. The device driver 161 may be a part of the OS 160.

A library 162 contains collected functions that are frequently used, and provides basic functions such as memory management, task management, input/output, and file operations, using the functions of the OS 160. As a concrete example, glibc used in Linux can be given.

An API 163 is a software interface for using functions provided by the device driver 161 and the OS 160 through the library 162.

An application 164 is software that computes a control command value used to control the control devices 121, and transmits and receives a communication packet using the LAN 156.

Next, relations between the functional units shown in Fig. 6 and Fig. 11 and the software configuration shown in Fig. 17 are shown.

The communication unit 112, the transmission unit 110, and the reception unit 111 are configured using the LAN 156.

The nonperiodic transmission unit 114 and the periodic transmission unit 115 are configured using the application 164 .

The time management unit 116 is configured using a timer device included in the CPU 150 and functions of the OS 160 obtained by abstracting the timer device with the device driver 160.

The schedule unit 117, the data processing time estimation unit 118, and the real-time processing unit 119 are configured using the library 162 or the OS 160.

The retransmission unit 130, the retransmission control unit 131, the abnormality determination unit 132, the time-out determination unit 133, the reply confirmation unit 134, and the WKC confirmation unit 135 are configured using the application 164, or the library 162 and the OS 160.

In general, a system using software is lower than that using hardware in the predictability of the processing period of time. In order to prevent the lowering of the predictability, the schedule unit 117, the data processing time estimation unit 118, and the real-time processing unit 119 are set as high-priority tasks, and interruption other than that by a timer device as a hardware resource of the time management unit 116 is preferably prohibited.

Further, in order to obtain the processing performance of the real-time processing unit 119, it is preferable to experimentally evaluate the same in advance.

Effects obtained by the above-described embodiment will be described.

The present invention can be carried out using general-purpose hardware while obtaining the same effects as those in the first embodiment and the second embodiment, and the flexibility of the system architecture can be enhanced.

**Claims**

1. A communication controller that is configured to communicate with one or more control devices (121) via a network (122), the communication controller (120) comprising:

   a nonperiodic transmission unit (114) that is configured to generate a transmission request at any time;
   a periodic transmission unit (115) that is configured to generate a transmission request in a constant period;
   a communication unit (112) that is configured to communicate transmission data of each of the nonperiodic transmission unit (114) and the periodic transmission unit (115) with the network (122); and
   a schedule unit (117) that is configured to: transmit transmission content of the periodic transmission unit (115) to the communication unit (112); compute a communication processing period of time required for a communication process of the nonperiodic transmission unit (114) having issued the transmission request; obtain a remaining period of time of the constant period of the periodic transmission unit (115); compares the communication processing period of time with the remaining period of time of the constant period; and transmits transmission content of the nonperiodic transmission unit (114) to the communication unit (112) if the communication processing period of time is shorter than the remaining period of time of the constant period;
   wherein
   the schedule unit (117) is configured to obtain a communication processing period of time Tp of the nonperiodic transmission unit (114) having issued the transmission request, as a sum of a processing period of time Tr calculated using the data size of the transmission data and a processing performance and a processing period of time Te in the communication unit (112).

2. The communication controller according to claim 1, wherein
   if the communication processing period of time of the nonperiodic transmission unit (114) having issued the transmission request is shorter than the remaining period of time of the constant period of the periodic transmission unit (115), the schedule unit (117) is configured to transmits the transmission content of the nonperiodic transmission unit (114) to the communication unit (112).

3. The communication controller according to claim 1, wherein
in the case where header data in accordance with the communication protocol of the network (122) are provided to the transmission data, the processing period of time Tr is obtained in consideration of the processing period of time required to provide the header data.

4. The communication controller according to any one of claims 1 to 3, wherein
the periodic transmission unit (115) is configured to handle a control command that is transmitted from the communication controller (120) to each control device (121), and the nonperiodic transmission unit (114) is configured to handle a request of obtaining management information and working information that is transmitted from the communication controller (120) to each control device (121).

5. The communication controller according to claim 1, further comprising an abnormality determination unit (132) that is configured to determine whether or not the transmission data of the periodic transmission unit (115) have been normally transmitted from the communication controller (120); and
a retransmission unit (130) that is configured to retransmit the transmission content of the periodic transmission unit (115) if the abnormality determination unit (132) determines as an abnormality in the communications wherein
the periodic transmission unit (115) is configured to handle a control command that is transmitted from the communication controller (120) to each control device (121), and the nonperiodic signal transmission unit includes a nonperiodic transmission unit (114) that is configured to handle a request of obtaining management information and working information that is transmitted from the communication controller (120) to each control device (121), and a retransmission unit (130) that is configured to detect a transmission failure of the control command by the periodic transmission unit (115) to retransmit the control command.

6. The communication controller according to claim 5, wherein
the transmission from the retransmission unit (130) is given priority over that from the nonperiodic transmission unit (114) .

7. The communication controller according to claim 1, further comprising
an abnormality determination unit (132) that is configured to determine whether or not the transmission data of the periodic transmission unit (115) have been normally transmitted from the communication controller (120) ; and
a retransmission unit (130) that is configured to retransmit the transmission content of the periodic transmission unit (115) if the abnormality determination unit (132) determines as an abnormality in the communications, wherein
the schedule unit (117) is configured to transmit the transmission content of the nonperiodic transmission unit (114) to the communication unit (112) if the communication processing period of time of the nonperiodic transmission unit (114) having issued the transmission request is shorter than the remaining period of time of the constant period of the periodic transmission unit (115), and
the schedule unit (117) is configured to: compute a communication processing period of time required for a communication process of the retransmission unit (130) having issued the transmission request; obtain a remaining period of time of the constant period of the periodic transmission unit (115); compare the communication processing period of time with the remaining period of time of the constant period; and transmit the transmission content of the retransmission unit (130) to the communication unit (112) if the communication processing period of time of the retransmission unit (130) having issued the transmission request is shorter than the remaining period of time of the constant period of the periodic transmission unit (115).

8. The communication controller according to claim 7, wherein
the schedule unit (117) is configured to transmit the transmission content of the periodic transmission unit (115) to the communication unit (112), and transmit the transmission content of the nonperiodic transmission unit (114) to the communication unit (112) if the communication processing period of time of the nonperiodic transmission unit (114) having issued the transmission request is shorter than the remaining period of time of the constant period of the periodic transmission unit (115) and if the transmission data of the periodic transmission unit (115) in addition to the retransmission has been normally transmitted from the communication controller (120), and
the schedule unit (117) is configured to transmit the transmission content of the retransmission unit (130) to the communication unit (112) if the communication processing period of time of the retransmission unit (130) having issued the transmission request is shorter than the remaining period of time of the constant period of the periodic transmission unit (115).

9. The communication controller according to claims 7 or 8, wherein

the schedule unit (117) is configured to transmit the transmission content of the periodic transmission unit (115) to the communication unit (112), and transmit the transmission content of the nonperiodic transmission unit (114) to the communication unit (112) if the communication processing period of time of the nonperiodic transmission unit (114) having issued the transmission request is shorter than the remaining period of time of the constant period of the periodic transmission unit (115) and if the transmission data have been retransmitted the predetermined number of times, and

the schedule unit (117) is configured to transmit the transmission content of the retransmission unit (130) to the communication unit (112) if the communication processing period of time of the retransmission unit (130) having issued the transmission request is shorter than the remaining period of time of the constant period of the periodic transmission unit (115).

10. The communication controller according to any one of claims 7 to 9, wherein
if no acknowledgement is received from the control device (121) before a predetermined period of time elapses after the periodic transmission, the abnormality determination unit (132) is configured to determine the transmission as an abnormality.

11. The communication controller according to any one of claims 7 to 10, wherein
if the transmission content of the nonperiodic transmission unit (114) is not transmitted to the communication unit (112) within the predetermined number of constant periods, the transmission content of the nonperiodic transmission unit (114) is deleted.

12. A communication control method for a communication controller (120) that communicates with one or more control devices (121) via a network (122), wherein:

the communication controller (120) transmits a periodic transmission signal in each of constant periods; and when a nonperiodic transmission signal generated at any time is transmitted, the communication controller (120) obtains a first remaining period of time between the time a transmission request for the nonperiodic transmission signal is generated in the constant period and the time the next constant period starts and a period of time required to transmit the nonperiodic transmission signal, and transmits the nonperiodic transmission signal within the constant period if it is confirmed that the transmission of the nonperiodic transmission signal can be completed in the first remaining period of time;
wherein the communication controller (120) obtains a communication processing period of time $Tp$ required to transmit the nonperiodic transmission signal, as a sum of a processing period of time $Tr$ calculated using the data size of the transmission data and a processing performance and a processing period of time $Te$ in a communication unit (112) of the communication controller (120).

13. The communication control method according to claim 12, wherein
if the first remaining period of time is not sufficient to transmit the nonperiodic transmission signal in the constant period in which the transmission request for the nonperiodic transmission signal has been generated, the nonperiodic transmission signal is transmitted in the next constant period or thereafter after confirming a second remaining period of time obtained by subtracting the period of time required to transmit the periodic transmission signal from the constant period and a period of time required to transmit the nonperiodic transmission signal.

14. The communication control method according to claim 12 or 13, wherein
the periodic transmission signal is a control signal for providing an operation instruction to each control device (121), and the nonperiodic transmission signal generated at any time is a signal related to management of each control device (121).

15. A communication control method according to claim 14, wherein:
the communication controller (120) transmits a periodic transmission signal in each of constant periods; if the transmission of the periodic transmission signal fails, the communication controller (120) obtains a third remaining period of time between the time the failure is detected and the time the next constant period starts and a period of time required to retransmit the periodic transmission signal; and the periodic transmission signal is retransmitted after confirming that the retransmission of the periodic transmission signal can be completed in the third remaining period of time.

16. The communication control method according to claim 15, wherein
when the nonperiodic transmission signal generated at any time is transmitted, the first remaining period of time between the time the transmission request for the nonperiodic transmission signal is generated in the constant period and the time the next constant period starts and a period of time required to transmit the nonperiodic transmission signal are obtained, and the nonperiodic transmission signal is transmitted within the constant period after confirming that the transmission of the nonperiodic transmission signal can be completed in the first remaining period of time.

**17.** The communication control method according to claim 16, wherein
if the retransmission request for the periodic transmission signal and the transmission request for the nonperiodic transmission signal are received in the same constant period, the retransmission of the periodic transmission signal is given priority, and the transmission of the nonperiodic transmission signal is performed in the next constant period or thereafter.

**Patentansprüche**

**1.** Kommunikationssteuereinheit, die konfiguriert ist, mit einer oder mehreren Steuereinrichtungen (121) über ein Netz (122) zu kommunizieren, wobei die Kommunikationssteuereinheit (120) Folgendes umfasst:

eine nichtperiodische Übertragungseinheit (114), die konfiguriert ist, jederzeit eine Übertragungsanforderung zu erzeugen;
eine periodische Übertragungseinheit (115), die konfiguriert ist, mit einer konstanten Periode eine Übertragungsanforderung zu erzeugen;
eine Kommunikationseinheit (112), die konfiguriert ist, Übertragungsdaten der nichtperiodischen Übertragungseinheit (114) und der periodischen Übertragungseinheit (115) mit dem Netz (122) zu kommunizieren; und
eine Planungseinheit (117), die konfiguriert ist, den Übertragungsinhalt der periodischen Übertragungseinheit (115) zur Kommunikationseinheit (112) zu senden; einen Kommunikationsverarbeitungszeitraum, der für einen Kommunikationsvorgang der nichtperiodischen Übertragungseinheit (114), die die Übertragungsanforderung ausgegeben hat, erforderlich ist, zu berechnen; und einen verbleibenden Zeitraum der konstanten Periode der periodischen Übertragungseinheit (115) zu erhalten; den Kommunikationsverarbeitungszeitraum mit dem verbleibenden Zeitraum der konstanten Periode zu vergleichen und den Übertragungsinhalt der nichtperiodischen Übertragungseinheit (114) zur Kommunikationseinheit (112) zu übertragen, wenn der Kommunikationsverarbeitungszeitraum kürzer als der verbleibende Zeitraum der konstanten Periode ist; wobei
die Planungseinheit (117) konfiguriert ist, einen Kommunikationsverarbeitungszeitraum Tp der nichtperiodischen Übertragungseinheit (114), die die Übertragungsanforderung ausgegeben hat, als eine Summe eines Verarbeitungszeitraums Tr, der unter Verwendung der Datengröße der Übertragungsdaten und einer Verarbeitungsleistungsfähigkeit berechnet wurde, und eines Verarbeitungszeitraums Te in der Kommunikationseinheit (112) zu erhalten.

**2.** Kommunikationssteuereinheit nach Anspruch 1, wobei
die Planungseinheit (117) konfiguriert ist, dann, wenn der Kommunikationsverarbeitungszeitraum der nichtperiodischen Übertragungseinheit (114), die die Übertragungsanforderung ausgegeben hat, kürzer als der verbleibende Zeitraum der konstanten Periode der periodischen Übertragungseinheit (115) ist, den Übertragungsinhalt der nichtperiodischen Übertragungseinheit (114) zur Kommunikationseinheit (112) zu senden.

**3.** Kommunikationssteuereinheit nach Anspruch 1, wobei
dann, wenn Kopfsatzdaten in Übereinstimmung mit dem Kommunikationsprotokoll des Netzes (122) in den Übertragungsdaten vorgesehen sind, der Verarbeitungszeitraum Tr unter Berücksichtigung des Verarbeitungszeitraums, der zum Vorsehen der Kopfsatzdaten erforderlich ist, erhalten wird.

**4.** Kommunikationssteuereinheit nach einem der Ansprüche 1 bis 3, wobei
die periodische Übertragungseinheit (115) konfiguriert ist, eine Steueranweisung zu bearbeiten, die von der Kommunikationssteuereinheit (120) zu jeder Steuereinrichtung (121) gesendet wird, und die nichtperiodische Übertragungseinheit (114) konfiguriert ist, eine Anforderung zum Erhalten von Managementinformationen und Betriebsinformationen, die von der Kommunikationssteuereinheit (120) zu jeder Steuereinrichtung (121) gesendet wird, zu bearbeiten.

**5.** Kommunikationssteuereinheit nach Anspruch 1, die ferner eine Anomaliebestimmungseinheit (132) umfasst, die konfiguriert ist, zu bestimmen, ob die Übertragungsdaten der periodischen Übertragungseinheit (115) von der Kommunikationssteuereinheit (120) normal übertragen worden sind oder nicht; und

eine Neuübertragungseinheit (130), die konfiguriert ist, den Übertragungsinhalt der periodischen Übertragungseinheit (115) erneut zu senden, wenn die Anomaliebestimmungseinheit (132) eine Anomalie in den Kommunikationen bestimmt, wobei

die periodische Übertragungseinheit (115) konfiguriert ist, eine Steueranweisung, die von der Kommunikationssteuereinheit (120) zu jeder Steuereinrichtung (121) gesendet wurde, zu bearbeiten, und die nichtperiodische Signalübertragungseinheit eine nichtperiodische Übertragungseinheit (114), die konfiguriert ist, eine Anforderung zum Erhalten von Managementinformationen und Betriebsinformationen, die von der Kommunikationssteuereinheit (120) zu jeder Steuereinrichtung (121) gesendet wurden, zu bearbeiten, und eine Neuübertragungseinheit (130), die konfiguriert ist, einen Übertragungsfehler der Steueranweisung durch die periodische Übertragungseinheit (115) zu detektieren, um die Steueranweisung erneut zu senden, enthält.

6. Kommunikationssteuereinheit nach Anspruch 5, wobei

dem Senden von der Neuübertragungseinheit (130) Priorität gegenüber dem Senden von der nichtperiodischen Übertragungseinheit (114) gegeben wird.

7. Kommunikationssteuereinheit nach Anspruch 1, die ferner Folgendes umfasst:

eine Anomaliebestimmungseinheit (132), die konfiguriert ist, zu bestimmen, ob die Übertragungsdaten der periodischen Übertragungseinheit (115) von der Kommunikationssteuereinheit (120) normal übertragen worden sind oder nicht; und

eine Neuübertragungseinheit (130), die konfiguriert ist, den Übertragungsinhalt der periodischen Übertragungseinheit (115) erneut zu senden, wenn die Anomaliebestimmungseinheit (132) eine Anomalie in den Kommunikationen bestimmt, wobei

die Planungseinheit (117) konfiguriert ist, den Übertragungsinhalt der nichtperiodischen Übertragungseinheit (114) zur Kommunikationseinheit (112) zu senden, wenn der Kommunikationsverarbeitungszeitraum der nichtperiodischen Übertragungseinheit (114), die die Übertragungsanforderung ausgegeben hat, kürzer als der verbleibende Zeitraum der konstanten Periode der periodischen Übertragungseinheit (115) ist, und

die Planungseinheit (117) konfiguriert ist, einen Kommunikationsverarbeitungszeitraum, der für einen Kommunikationsvorgang der Neuübertragungseinheit (130), die die Übertragungsanforderung ausgegeben hat, erforderlich ist, zu berechnen; einen verbleibenden Zeitraum der konstanten Periode der periodischen Übertragungseinheit (115) zu erhalten; den Kommunikationsverarbeitungszeitraum mit dem verbleibenden Zeitraum der konstanten Periode zu vergleichen und den Übertragungsinhalt der Neuübertragungseinheit (130) zur Kommunikationseinheit (112) zu übertragen, wenn der Kommunikationsverarbeitungszeitraum der Neuübertragungseinheit (130), die die Übertragungsanforderung ausgegeben hat, kürzer als der verbleibende Zeitraum der konstanten Periode der periodischen Übertragungseinheit (115) ist.

8. Kommunikationssteuereinheit nach Anspruch 7, wobei

die Planungseinheit (117) konfiguriert ist, den Übertragungsinhalt der periodischen Übertragungseinheit (115) zur Kommunikationseinheit (112) zu senden und den Übertragungsinhalt der nichtperiodischen Übertragungseinheit (114) zur Kommunikationseinheit (112) zu senden, wenn der Kommunikationsverarbeitungszeitraum der nichtperiodischen Übertragungseinheit (114), die die Übertragungsanforderung ausgegeben hat, kürzer als der verbleibende Zeitraum der konstanten Periode der periodischen Übertragungseinheit (115) ist und wenn die Übertragungsdaten der periodischen Übertragungseinheit (115) zusätzlich zur Neuübertragung von der Kommunikationssteuereinheit (120) normal gesendet worden sind, und

die Planungseinheit (117) konfiguriert ist, den Übertragungsinhalt der Neuübertragungseinheit (130) zur Kommunikationseinheit (112) zu senden, wenn der Kommunikationsverarbeitungszeitraum der Neuübertragungseinheit (130), die die Übertragungsanforderung ausgegeben hat, kürzer als der verbleibende Zeitraum der konstanten Periode der periodischen Übertragungseinheit (115) ist.

9. Kommunikationssteuereinheit nach Anspruch 7 oder 8, wobei

die Planungseinheit (117) konfiguriert ist, den Übertragungsinhalt der periodischen Übertragungseinheit (115) zur Kommunikationseinheit (112) zu senden und den Übertragungsinhalt der nichtperiodischen Übertragungseinheit (114) zur Kommunikationseinheit (112) zu senden, wenn der Kommunikationsverarbeitungszeitraum der nichtperiodischen Übertragungseinheit (114), die die Übertragungsanforderung ausgegeben hat, kürzer als der verbleibende Zeitraum der konstanten Periode der periodischen Übertragungseinheit (115) ist und wenn die Übertragungsdaten in der vorgegebenen Anzahl erneut gesendet worden sind, und

die Planungseinheit (117) konfiguriert ist, den Übertragungsinhalt der Neuübertragungseinheit (130) zur Kommunikationseinheit (112) zu senden, wenn der Kommunikationsverarbeitungszeitraum der Neuübertragungseinheit (130), die die Übertragungsanforderung ausgegeben hat, kürzer als der verbleibende Zeitraum der konstanten Periode der periodischen Übertragungseinheit (115) ist.

10. Kommunikationssteuereinheit nach einem der Ansprüche 7 bis 9, wobei
die Anomaliebestimmungseinheit (132) konfiguriert ist, dann, wenn keine Bestätigung von der Steuereinrichtung (121) empfangen worden ist, bevor ein vorgegebener Zeitraum nach der periodischen Übertragung verstrichen ist, die Übertragung als eine Anomalie zu bestimmen.

11. Kommunikationssteuereinheit nach einem der Ansprüche 7 bis 10, wobei
der Übertragungsinhalt der nichtperiodischen Übertragungseinheit (114) gelöscht wird, wenn der Übertragungsinhalt der nichtperiodischen Übertragungseinheit (114) in der vorgegebenen Anzahl konstanter Perioden nicht zur Kommunikationseinheit (112) gesendet wird.

12. Kommunikationssteuerverfahren für eine Kommunikationssteuereinheit (120), die mit einer oder mehreren Steuereinrichtungen (121) über ein Netz (122) kommuniziert, wobei
die Kommunikationssteuereinheit (120) ein periodisches Übertragungssignal in jeder von konstanten Perioden sendet und dann, wenn ein nichtperiodisches Übertragungssignal, das zu einer beliebigen Zeit erzeugt wird, gesendet wird, die Kommunikationssteuereinheit (120) einen ersten verbleibenden Zeitraum zwischen der Zeit, zu der eine Übertragungsanforderung für das nichtperiodische Übertragungssignal in der konstanten Periode erzeugt wird, und der Zeit, zu der die nächste konstante Periode beginnt, und einen Zeitraum, der erforderlich ist, um das nichtperiodische Übertragungssignal zu senden, erhält und das nichtperiodische Übertragungssignal in der konstanten Periode sendet, wenn bestätigt wird, dass die Übertragung des nichtperiodischen Übertragungssignals im ersten verbleibenden Zeitraum abgeschlossen werden kann; und
die Kommunikationssteuereinheit (120) einen Kommunikationsverarbeitungszeitraum Tp, der erforderlich ist, um das nichtperiodische Übertragungssignal zu senden, als eine Summe eines Verarbeitungszeitraums Tr, der unter Verwendung der Datengröße der Übertragungsdaten und einer Verarbeitungsleistungsfähigkeit berechnet wurde, und eines Verarbeitungszeitraums Te in einer Kommunikationseinheit (112) der Kommunikationssteuereinheit (120) erhält.

13. Kommunikationssteuerverfahren nach Anspruch 12, wobei
dann, wenn der erste verbleibende Zeitraum nicht ausreichend ist, das nichtperiodische Übertragungssignal in der konstanten Periode, in der die Übertragungsanforderung für das nichtperiodische Übertragungssignal erzeugt worden ist, zu senden, das nichtperiodische Übertragungssignal in der nächsten konstanten Periode oder danach gesendet wird, nachdem ein zweiter verbleibender Zeitraum, der durch Subtrahieren des Zeitraums, der zum Senden des periodischen Übertragungssignals erforderlich ist, von der konstanten Periode erhalten worden ist, und ein Zeitraum, der zum Senden des nichtperiodischen Übertragungssignals erforderlich ist, bestätigt worden sind.

14. Kommunikationssteuerverfahren nach Anspruch 12 oder 13, wobei
das periodische Übertragungssignal ein Steuersignal zum Liefern einer Betriebsanweisung zu jeder Steuereinrichtung (121) ist und das nichtperiodische Übertragungssignal, das zu einer beliebigen Zeit erzeugt worden ist, ein Signal ist, das mit dem Management jeder Steuereinrichtung (121) in Beziehung steht.

15. Kommunikationssteuerverfahren nach Anspruch 14, wobei
die Kommunikationssteuereinheit (120) ein periodisches Übertragungssignal in jeder von konstanten Perioden sendet; dann, wenn das Senden des periodischen Übertragungssignals fehlschlägt, die Kommunikationssteuereinheit (120) einen dritten verbleibenden Zeitraum zwischen der Zeit, zu der der Fehler detektiert wird, und der Zeit, zu der die nächste konstante Periode beginnt, und einen Zeitraum, der erforderlich ist, um das periodische Übertragungssignal erneut zu senden, erhält und das periodische Übertragungssignal erneut gesendet wird, nachdem bestätigt worden ist, dass das Weitersenden des periodischen Übertragungssignals im dritten verbleibenden Zeitraum abgeschlossen werden kann.

16. Kommunikationssteuerverfahren nach Anspruch 15, wobei
dann, wenn das nichtperiodische Übertragungssignal, das zu einer beliebigen Zeit erzeugt worden ist, gesendet wird, der erste verbleibende Zeitraum zwischen der Zeit, zu der die Übertragungsanforderung für das nichtperiodische Übertragungssignal in der konstanten Periode erzeugt wird, und der Zeit, zu der die nächste konstante Periode beginnt, und ein Zeitraum, der zum Senden des nichtperiodischen Übertragungssignals erforderlich ist, erhalten werden und das nichtperiodische Übertragungssignal in der konstanten Periode gesendet wird, nachdem bestätigt worden ist, dass das Übertragen des nichtperiodischen Übertragungssignals im ersten verbleibenden Zeitraum abgeschlossen werden kann.

17. Kommunikationssteuerverfahren nach Anspruch 16, wobei
dann, wenn die Neuübertragungsanforderung für das periodische Übertragungssignal und die Übertragungsanforderung für das nichtperiodische Übertragungssignal in derselben konstanten Periode empfangen werden, dem Weitersenden des periodischen Übertragungssignals Priorität gegeben wird und die Übertagung des nichtperiodischen Übertragungssignals in der nächsten konstanten Periode oder danach durchgeführt wird.

## Revendications

1. Contrôleur de communication qui est configuré pour communiquer avec un ou plusieurs dispositifs de commande (121) via un réseau (122), le contrôleur de communication (120) comprenant :

   une unité de transmission non périodique (114) qui est configurée pour générer une demande de transmission à un moment quelconque ;
   une unité de transmission périodique (115) qui est configurée pour générer une demande de transmission dans une période constante ;
   une unité de communication (112) qui est configurée pour communiquer des données de transmission de chacune de l'unité de transmission non périodique (114) et de l'unité de transmission périodique (115) avec le réseau (122) ; et
   une unité d'ordonnancement (117) qui est configurée pour: transmettre un contenu de transmission de l'unité de transmission périodique (115) à l'unité de communication (112) ; calculer une période de temps de traitement de communication nécessaire pour un processus de communication de l'unité de transmission non périodique (114) ayant émis la demande de transmission ; obtenir une période de temps restante de la période constante de l'unité de transmission périodique (115) ; comparer la période de temps de traitement de communication avec la période de temps restante de la période constante ; et transmettre le contenu de transmission de l'unité de transmission non périodique (114) à l'unité de communication (112) si la période de temps de traitement de communication est plus courte que la période de temps restante de la période constante ;
   dans lequel l'unité d'ordonnancement (117) est configurée pour obtenir une période de temps de traitement de communication Tp de l'unité de transmission non périodique (114) ayant émis la demande de transmission comme une somme d'une période de temps de traitement Tr calculée en utilisant la taille de données des données de transmission et une performance de traitement et d'une période de temps de traitement Te dans l'unité de communication (112).

2. Contrôleur de communication selon la revendication 1, dans lequel
si la période de temps de traitement de communication de l'unité de transmission non périodique (114) ayant émis la demande de transmission est plus courte que la période de temps restante de la période constante de l'unité de transmission périodique (115), l'unité d'ordonnancement (117) est configurée pour transmettre le contenu de transmission de l'unité de transmission non périodique (114) à l'unité de communication (112).

3. Contrôleur de communication selon la revendication 1, dans lequel,
dans le cas où des données d'en-tête conformes au protocole de communication du réseau (122) sont fournies pour les données de transmission, la période de temps de traitement Tr est obtenue en tenant compte de la période de temps de traitement nécessaire pour fournir les données d'en-tête.

4. Contrôleur de communication selon l'une quelconque des revendications 1 à 3, dans lequel
l'unité de transmission périodique (115) est configurée pour traiter un ordre de commande qui est transmis par le contrôleur de communication (120) à chaque dispositif de commande (121), et l'unité de transmission non périodique (114) est configurée pour traiter une demande d'obtention d'informations de gestion et d'informations de travail qui est transmise par le contrôleur de communication (120) à chaque dispositif de commande (121).

5. Contrôleur de communication selon la revendication 1, comprenant en outre
une unité de détermination d'anomalie (132) qui est configurée pour déterminer si les données de transmission de l'unité de transmission périodique (115) ont été ou non normalement transmises par le contrôleur de communication (120) ; et
une unité de retransmission (130) qui est configurée pour retransmettre le contenu de transmission de l'unité de transmission périodique (115) si l'unité de détermination d'anomalie (132) détermine qu'il y a une anomalie dans les communications, dans lequel

l'unité de transmission périodique (115) est configurée pour traiter un ordre de commande qui est transmis par le contrôleur de communication (120) à chaque dispositif de commande (121) et l'unité de transmission de signaux non périodique inclut une unité de transmission non périodique (114) qui est configurée pour traiter une demande d'obtention d'informations de gestion et d'informations de travail qui est transmise par le contrôleur de communication (120) à chaque dispositif de commande (121), et

une unité de retransmission (130) qui est configurée pour détecter un échec de transmission de l'ordre de commande par l'unité de transmission périodique (115) pour retransmettre l'ordre de commande.

6. Contrôleur de communication selon la revendication 5, dans lequel
   la transmission par l'unité de retransmission (130) est prioritaire par rapport à celle de l'unité de transmission non périodique (114).

7. Contrôleur de communication selon la revendication 1, comprenant en outre
   une unité de détermination d'anomalie (132) qui est configurée pour déterminer si les données de transmission de l'unité de transmission périodique (115) ont été ou non normalement transmises par le contrôleur de communication (120) ; et
   une unité de retransmission (130) qui est configurée pour retransmettre le contenu de transmission de l'unité de transmission périodique (115) si l'unité de détermination d'anomalie (132) détermine qu'il y a une anomalie dans les communications, dans lequel
   l'unité d'ordonnancement (117) est configurée pour transmettre le contenu de transmission de l'unité de transmission non périodique (114) à l'unité de communication (112) si la période de temps de traitement de communication de l'unité de transmission non périodique (114) ayant émis la demande de transmission est plus courte que la période de temps restante de la période constante de l'unité de transmission périodique (115), et
   l'unité d'ordonnancement (117) est configurée pour: calculer une période de temps de traitement de communication nécessaire pour un processus de communication de l'unité de retransmission (130) ayant émis la demande de transmission ; obtenir une période de temps restante de la période constante de l'unité de transmission périodique (115) ; comparer la période de temps de traitement de communication avec la période de temps restante de la période constante ; et transmettre le contenu de transmission de l'unité de retransmission (130) à l'unité de communication (112) si la période de temps de traitement de communication de l'unité de retransmission (130) ayant émis la demande de transmission est plus courte que la période de temps restante de la période constante de l'unité de transmission périodique (115).

8. Contrôleur de communication selon la revendication 7, dans lequel
   l'unité d'ordonnancement (117) est configurée pour transmettre le contenu de transmission de l'unité de transmission périodique (115) à l'unité de communication (112), et transmettre le contenu de transmission de l'unité de transmission non périodique (114) à l'unité de communication (112) si la période de traitement de communication de l'unité de transmission non périodique (114) ayant émis la demande de transmission est plus courte que la période restante de la période constante de l'unité de transmission périodique (115) et si les données de transmission de l'unité de transmission périodique (115) en plus de la retransmission ont été normalement transmises par le contrôleur de communication (120), et
   l'unité d'ordonnancement (117) est configurée pour transmettre le contenu de transmission de l'unité de retransmission (130) à l'unité de communication (112) si la période de temps de traitement de communication de l'unité de retransmission (130) ayant émis la demande de transmission est plus courte que la période de temps restante de la période constante de l'unité de transmission périodique (115).

9. Contrôleur de communication selon les revendications 7 ou 8, dans lequel
   l'unité d'ordonnancement (117) est configurée pour transmettre le contenu de transmission de l'unité de transmission périodique (115) à l'unité de communication (112), et transmettre le contenu de transmission de l'unité de transmission non périodique (114) à l'unité de communication (112) si la période de temps de traitement de communication de l'unité de transmission non périodique (114) ayant émis la demande de transmission est plus courte que la période de temps restante de la période constante de l'unité de transmission périodique (115) et si les données de transmission ont été retransmises le nombre de fois prédéterminé, et
   l'unité d'ordonnancement (117) est configurée pour transmettre le contenu de transmission de l'unité de retransmission (130) à l'unité de communication (112) si la période de temps de traitement de communication de l'unité de retransmission (130) ayant émis la demande de transmission est plus courte que la période de temps restante de la période constante de l'unité de transmission périodique (115).

**10.** Contrôleur de communication selon l'une quelconque des revendications 7 à 9, dans lequel
si aucun accusé de réception n'est reçu du dispositif de commande (121) avant qu'une période de temps prédéterminée ne s'écoule après la transmission périodique, l'unité de détermination d'anomalie (132) est configurée pour déterminer la transmission comme une anomalie.

**11.** Contrôleur de communication selon l'une des revendications 7 à 10, dans lequel
si le contenu de transmission de l'unité de transmission non périodique (114) n'est pas transmis à l'unité de communication (112) dans le nombre prédéterminé de périodes constantes, le contenu de transmission de l'unité de transmission non périodique (114) est supprimé.

**12.** Procédé de commande de communication pour un contrôleur de communication (120) qui communique avec un ou plusieurs dispositifs de commande (121) via un réseau (122), dans lequel :

le contrôleur de communication (120) transmet un signal de transmission périodique dans chacune de périodes constantes ; et lorsqu'un signal de transmission non périodique généré à un moment quelconque est transmis, le contrôleur de communication (120) obtient une première période de temps restante entre le moment où une demande de transmission du signal de transmission non périodique est générée dans la période constante et le moment où la période constante suivante commence ainsi qu'une période de temps nécessaire pour transmettre le signal de transmission non périodique, et transmet le signal de transmission non périodique dans la période constante s'il est confirmé que la transmission du signal de transmission non périodique peut être achevée dans la première période de temps restante ; dans lequel
le contrôleur de communication (120) obtient une période de temps de traitement de communication Tp nécessaire pour transmettre le signal de transmission non périodique comme une somme d'une période de temps de traitement Tr calculée en utilisant la taille de données des données de transmission et une performance de traitement et d'une période de temps de traitement Te dans une unité de communication (112) du contrôleur de communication (120).

**13.** Procédé de commande de communication selon la revendication 12, dans lequel
si la première période de temps restante n'est pas suffisante pour transmettre le signal de transmission non périodique dans la période 25 constante dans laquelle la demande de transmission du signal de transmission non périodique a été générée, le signal de transmission non périodique est transmis dans la période constante suivante ou après celle-ci après confirmation d'une deuxième période de temps restante obtenue en soustrayant la période de temps nécessaire pour transmettre le signal de transmission périodique de la période constante et d'une période de temps nécessaire pour transmettre le signal de transmission non périodique.

**14.** Procédé de commande de communication selon la revendication 12 ou 13, dans lequel
le signal de transmission périodique est un signal de commande pour fournir une instruction de fonctionnement à chaque dispositif de commande (121), et le signal de transmission non périodique généré à un moment quelconque est un signal lié à la gestion de chaque dispositif de commande (121).

**15.** Procédé de commande de communication selon la revendication 14, dans lequel :
le contrôleur de communication (120) transmet un signal de transmission périodique dans chacune de périodes constantes ; si la transmission du signal de transmission périodique échoue, le contrôleur de communication (120) obtient une troisième période de temps restante entre le moment où l'échec est détecté et le moment où la période constante suivante commence ainsi qu'une période de temps nécessaire pour retransmettre le signal de transmission périodique ; et le signal de transmission périodique est retransmis après confirmation que la retransmission du signal de transmission périodique peut être achevée dans la troisième période de temps restante.

**16.** Procédé de commande de communication selon la revendication 15, dans lequel,
lorsque le signal de transmission non périodique généré à un moment quelconque est transmis, la première période de temps restante entre le moment où la demande de transmission du signal de transmission non périodique est générée dans la période constante et le moment où la période constante suivante commence ainsi qu'une période de temps nécessaire pour transmettre le signal de transmission non périodique sont obtenues, et le signal de transmission non périodique est transmis dans la période constante après confirmation que la transmission du signal de transmission non périodique peut être achevée dans la première période de temps restante.

**17.** Procédé de commande de communication selon la revendication 16, dans lequel
si la demande de retransmission du signal de transmission périodique et la demande de transmission du signal de transmission non périodique sont reçues dans la même période constante, la retransmission du signal de transmission périodique est prioritaire et la transmission du signal de transmission non périodique est effectuée dans la période constante suivante ou après celle-ci.

# FIG. 1

START

S001
HAS TRANSMISSION REQUEST BEEN ISSUED ?  N

Y

S002
HAS TRANSMISSION REQUEST BEEN ISSUED FROM PERIODIC TRANSMISSION UNIT ?  N

Y

S004
PROCESSING PERIOD OF TIME FOR NONPERIODIC TRANSMISSION DATA AND REMAINING PERIOD OF TIME OF TRANSMISSION PERIOD ARE OBTAINED

S003
PERIODIC TRANSMISSION IS PERMITTED

S005
IS PROCESSING PERIOD OF TIME FOR NONPERIODIC TRANSMISSION DATA SHORTER THAN REMAINING PERIOD OF TIME OF TRANSMISSION PERIOD ?  N

Y

S006
NONPERIODIC TRANSMISSION IS PERMITTED

S007
NONPERIODIC TRANSMISSION IS NOT PERMITTED

S008
HAS TRANSMISSION REQUEST BEEN ISSUED FROM PERIODIC TRANSMISSION UNIT ?  N

Y

# FIG. 2

*FIG. 3*

*FIG. 4*

# FIG. 5

# FIG. 6

# FIG. 7

```
                        START

              ┌──────────────────────────┐ S020
              │   HAS TRANSMISSION        │
              │  REQUEST BEEN ISSUED    N │
              │   FROM NONPERIODIC        │
              │   TRANSMISSION UNIT ?     │
              └──────────────────────────┘
                        Y

              ┌──────────────────────────┐ S021
              │   HAS TRANSMISSION        │
              │ REQUEST BEEN PERMITTED ? N│
              └──────────────────────────┘
                        Y

                              ┌──────────────────────┐ S022
                              │   NUMBER OF FAILURES  │
                              │    OF NONPERIODIC     │
                              │    TRANSMISSION IS    │
                              │   INCREMENTED BY 1    │
                              └──────────────────────┘

                              ┌──────────────────────┐ S023
                              │    IS NUMBER OF       │
                              │  FAILURES LARGER THAN N│
                              │  THRESHOLD VALUE ?    │
                              └──────────────────────┘
                                        Y

                              ┌──────────────────────┐ S024
                              │   NOTIFY NONPERIODIC  │
                              │   TRANSMISSION UNIT   │
                              └──────────────────────┘
```

# FIG. 8

```
        ┌─────────┐
        │  START  │
        └─────────┘
             │
             ▼                    S010
┌──────────────────────────┐
│  PROCESSING PERFORMANCE  │
│  OF REAL-TIME PROCESSING │
│     UNIT IS OBTAINED     │
└──────────────────────────┘
             │
             ▼                    S011
┌──────────────────────────┐
│ DATA SIZE OF TRANSMISSION│
│   DATA IS OBTAINED FROM  │
│       SCHEDULE UNIT      │
└──────────────────────────┘
             │
             ▼                    S012
┌──────────────────────────┐
│ PROCESSING PERIOD OF TIME│
│ Tr IN REAL-TIME PROCESSING│
│     UNIT IS CALCULATED   │
└──────────────────────────┘
             │
             ▼                    S013
┌──────────────────────────┐
│ PROCESSING PERIOD OF TIME│
│    Te IN COMMUNICATION   │
│     UNIT IS CALCULATED   │
└──────────────────────────┘
             │
             ▼                    S014
┌──────────────────────────┐
│ PROCESSING PERIOD OF TIME│
│    Tp FOR TRANSMISSION   │
│     DATA IS CALCULATED   │
└──────────────────────────┘
             │
             ▼
        ┌─────────┐
        │   END   │
        └─────────┘
```

# FIG. 9

```
|←————————— 80μs —————————→|        |←—— 20μs ——→|
                                                          t3              t4
┌──────────────┐                            ┌──────────────┐┌──────────────┐   time
│  PERIODIC    │                      t2    │  PERIODIC    ││ NONPERIODIC  │  ——→
│ TRANSMISSION │                            │ TRANSMISSION ││ TRANSMISSION │
└──────────────┘                            └──────────────┘└──────────────┘
 t1                        ┌ ─ ─ ─ ─ ─ ─ ─ ─ ┐
                           │   NONPERIODIC    │
                           │ TRANSMISSION 500B│
                           └ ─ ─ ─ ─ ─ ─ ─ ─ ┘
|←———————— TRANSMISSION PERIOD ————————→|←———————— TRANSMISSION PERIOD ————————→|
              (100μs)                                    (100μs)
```

# FIG. 10

```
 t1                       t3          t4         t5          t6        t7          t8      time
                                                                                           ——→
┌──────────┐        ┌──────────┐    ┌──────────┐        ┌──────────┐┌──────────┐
│ PERIODIC │        │ PERIODIC │    │ PERIODIC │        │ PERIODIC ││NONPERIOD-│
│ TRANS-   │   t2   │ TRANS-   │    │ TRANS-   │        │ TRANS-   ││IC TRANS- │
│ MISSION 3│        │ MISSION 1│    │ MISSION 2│        │ MISSION 3││MISSION   │
└──────────┘        └──────────┘    └──────────┘        └──────────┘└──────────┘
            ┌ ─ ─ ─ ─ ┐  ┌ ─ ─ ─ ─ ┐          ┌ ─ ─ ─ ─ ┐
            │NONPERIOD-│  │NONPERIOD-│          │NONPERIOD-│
            │IC TRANS- │  │IC TRANS- │          │IC TRANS- │
            │MISSION   │  │MISSION   │          │MISSION   │
            └ ─ ─ ─ ─ ┘  └ ─ ─ ─ ─ ┘          └ ─ ─ ─ ─ ┘
|←— TRANSMISSION —→|←— TRANSMISSION —→|←— TRANSMISSION —→|←— TRANSMISSION —→|
      PERIOD              PERIOD              PERIOD              PERIOD
```

# FIG. 11

# FIG. 12

```
                    START

              ~ S030
        HAS TRANSMISSION            N
        REQUEST BEEN ISSUED ?

              Y
              ~ S031
        HAS TRANSMISSION        N
        REQUEST BEEN ISSUED ──────────────┐
        FROM PERIODIC                      │
        TRANSMISSION UNIT ?                ~ S033
                                      HAS TRANSMIS-
              Y                       SION REQUEST
                                      BEEN ISSUED FROM   N ──────────────┐
              ~ S032                  RETRANS-                            │
        PERIODIC TRANSMIS-            MISSION UNIT ?                      │
        SION IS PERMITTED                                                │
                                           Y                             │
                                    ~ S034                        ~ S004
                              PROCESSING PERIOD OF       PROCESSING PERIOD OF
                              TIME FOR RETRANSMIS-       TIME FOR NONPERIODIC
                              SION DATA AND REMAIN-      TRANSMISSION DATA AND
                              ING PERIOD OF TIME OF      REMAINING PERIOD OF
                              TRANSMISSION PERIOD        TIME OF TRANSMISSION
                              ARE OBTAINED               PERIOD ARE OBTAINED

                                    ~ S035                        ~ S005
                              IS PROCESSING PERIOD       IS PROCESSING PERIOD
                              OF TIME FOR RETRANS-       OF TIME FOR NONPERI-
                              MISSION DATA SHORTER   N   ODIC TRANSMISSION DATA   N
                              THAN REMAINING PERIOD      SHORTER THAN REMAINING
                              OF TIME OF TRANS-          PERIOD OF TIME OF
                              MISSION PERIOD ?           TRANSMISSION PERIOD ?

                                    Y                             Y
                                    ~ S036                        ~ S006
                              RETRANSMISSION             NONPERIODIC
                              IS PERMITTED               TRANSMISSION
                                                         IS PERMITTED
```

35

# FIG. 13

START

S030
HAS TRANSMISSION REQUEST BEEN ISSUED ? — N

Y

S031
HAS TRANSMISSION REQUEST BEEN ISSUED FROM PERIODIC TRANSMISSION UNIT ? — N

Y

S032
PERIODIC TRANSMISSION IS PERMITTED

S033
HAS TRANSMISSION REQUEST BEEN ISSUED FROM RETRANSMISSION UNIT ? — N

Y

S034
PROCESSING PERIOD OF TIME FOR RETRANSMISSION DATA AND REMAINING PERIOD OF TIME OF TRANSMISSION PERIOD ARE OBTAINED

S035
IS PROCESSING PERIOD OF TIME FOR RETRANSMISSION DATA SHORTER THAN REMAINING PERIOD OF TIME OF TRANSMISSION PERIOD ? — N

Y

S036
RETRANSMISSION IS PERMITTED

S040
IS NONPERIODIC TRANSMISSION POSSIBLE ? — N

Y

S004
PROCESSING PERIOD OF TIME FOR NONPERIODIC TRANSMISSION DATA AND REMAINING PERIOD OF TIME OF TRANSMISSION PERIOD ARE OBTAINED

S005
IS PROCESSING PERIOD OF TIME FOR NONPERIODIC TRANSMISSION DATA SHORTER THAN REMAINING PERIOD OF TIME OF TRANSMISSION PERIOD ? — N

Y

S006
NONPERIODIC TRANSMISSION IS PERMITTED

# FIG. 14

# FIG. 15

# FIG. 16

# FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007158495 A
- JP HLL331261 B
- US 2002064157 A1